(19) Europäisches Patentamt
European Patent Office
Office européen des brevets

(11) **EP 4 269 342 A1**

(12) **EUROPEAN PATENT APPLICATION**
published in accordance with Art. 153(4) EPC

(43) Date of publication:
**01.11.2023 Bulletin 2023/44**

(51) International Patent Classification (IPC):
*C01B 33/20* (2006.01)     *C01B 33/22* (2006.01)
*C01B 33/10* (2006.01)     *C01F 5/28* (2006.01)
*H01M 4/36* (2006.01)      *H01M 4/38* (2006.01)
*H01M 4/48* (2010.01)      *H01M 4/62* (2006.01)
*H01M 4/587* (2010.01)

(21) Application number: **21911311.5**

(22) Date of filing: **03.12.2021**

(52) Cooperative Patent Classification (CPC):
**C01B 33/10; C01B 33/20; C01B 33/22; C01F 5/28;
H01M 4/36; H01M 4/38; H01M 4/48; H01M 4/587;
H01M 4/62;** Y02E 60/10

(86) International application number:
**PCT/KR2021/018269**

(87) International publication number:
**WO 2022/139244 (30.06.2022 Gazette 2022/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.12.2020 KR 20200182263**

(71) Applicant: **Daejoo Electronic Materials Co., Ltd.
Siheung-si, Gyeonggi-do 15094 (KR)**

(72) Inventors:
• **JEON, Young Min
Siheung-si, Gyeonggi-do 15094 (KR)**

• **PARK, Jeong Gyu
Siheung-si, Gyeonggi-do 15094 (KR)**
• **LEE, Hyun Seok
Siheung-si, Gyeonggi-do 15094 (KR)**
• **LIM, Sung Woo
Siheung-si, Gyeonggi-do 15094 (KR)**
• **NAM, Sang Jin
Siheung-si, Gyeonggi-do 15094 (KR)**
• **LIM, Jong Chan
Siheung-si, Gyeonggi-do 15094 (KR)**
• **LEE, Jung Hyun
Siheung-si, Gyeonggi-do 15094 (KR)**

(74) Representative: **HGF
HGF Limited
1 City Walk
Leeds LS11 9DX (GB)**

(54) **POROUS SILICON COMPOSITE, POROUS SILICON-CARBON COMPOSITE COMPRISING SAME, AND ANODE ACTIVE MATERIAL**

(57)     An embodiment of the present invention relates to a porous silicon composite, a porous silicon-carbon composite comprising same, and an anode active material, wherein the porous silicon composite and the porous silicon-carbon composite each comprise silicon particles and a magnesium compound together and satisfy a molar ratio (O/Si) of oxygen (O) atom to silicon (Si) atom in a specific range, so that the application of the porous silicon composite and the porous silicon-carbon composite to an anode active material leads to an excellent capacity retention rate as well as a significant improvement in discharge capacity and initial efficiency.

[Fig. 6]

(a)

(b)

(c)

## Description

### Technical Field

The present invention relates to a porous silicon composite, to a porous silicon-carbon composite, and to a negative electrode active material comprising the same.

### Background Art

In recent years, as electronic devices become smaller, lighter, thinner, and more portable in tandem with the development of the information and communication industry, the demand for a high energy density of batteries used as power sources for these electronic devices is increasing. A lithium secondary battery is a battery that can best meet this demand, and research on small batteries using the same, as well the application thereof to large electronic devices such as automobiles and power storage systems, is being actively conducted.

Carbon materials are widely used as a negative electrode active material of such a lithium secondary battery. Silicon-based negative electrode active materials are being studied in order to further enhance the capacity of a battery. Since the theoretical capacity of silicon (4,199 mAh/g) is greater than that of graphite (372 mAh/g) by 10 times or more, a significant enhancement in the battery capacity is expected.

The reaction scheme when lithium is intercalated into silicon is, for example, as follows:

$$[\text{Reaction scheme 1}]$$

$$22\text{Li} + 5\text{Si} = \text{Li}_{22}\text{Si}_5$$

In a silicon-based negative electrode active material according to the above reaction scheme, an alloy containing up to 4.4 lithium atoms per silicon atom with a high capacity is formed. However, in most silicon-based negative electrode active materials, volume expansion of up to 300% is induced by the intercalation of lithium, which destroys the negative electrode, making it difficult to exhibit high cycle characteristics.

In addition, this volume change may cause cracks on the surface of the negative electrode active material, and an ionic material may be formed inside the negative electrode active material, thereby causing the negative electrode active material to be electrically detached from the current collector. This electrical detachment phenomenon may significantly reduce the capacity retention rate of a battery.

In order to solve this problem, Japanese Patent No. 4393610 discloses a negative electrode active material in which silicon and carbon are mechanically processed to form a composite, and the surface of the silicon particles is coated with a carbon layer using a chemical vapor deposition (CVD) method.

In addition, Japanese Laid-open Patent Publication No. 2016-502253 discloses a negative electrode active material comprising porous silicon-based particles and carbon particles, wherein the carbon particles comprise fine carbon particles and coarse-grained carbon particles having different average particle diameters.

However, although these prior art documents relate to a negative electrode active material comprising silicon and carbon, there is a limit to suppressing volume expansion and contraction during charging and discharging. Thus, there is still a demand for research to solve these problems.

[Prior art documents]

[Patent documents]

[0010]

　　　(Patent Document 1) Japanese Patent No. 4393610
　　　(Patent Document 2) Japanese Laid-open Patent Publication No. 2016-502253
　　　(Patent Document 3) Korean Laid-open Patent Publication No. 2018-0106485

### Detailed Description of the Invention

### Technical Problem

The present invention is devised to solve the problems of the prior art. An object of the present invention is to provide a porous silicon composite with enhanced performance of a secondary battery when applied to a negative electrode active material as the porous silicon composite comprises silicon particles and a magnesium compound and has a molar ratio (O/Si) of oxygen (O) atoms to silicon (Si) atoms in the porous silicon composite controlled to a specific range.

Another object of the present invention is to provide a porous silicon-carbon composite with significantly improved discharge capacity and initial efficiency as well as excellent capacity retention rate when applied to a negative electrode active material as it comprises the porous silicon composite and carbon.

Still another object of the present invention is to provide processes for preparing the porous silicon composite and the porous silicon-carbon composite.

Still another object of the present invention is to provide a negative electrode active material comprising the porous silicon-carbon composite and a lithium secondary battery comprising the same.

## Solution to the Problem

The present invention provides a porous silicon composite, which comprises silicon particles and a magnesium compound, wherein the molar ratio (O/Si) of oxygen (O) atoms to silicon (Si) atoms in the porous silicon composite is 0.01 to 0.35.

In addition, the present invention provides a porous silicon-carbon composite, which comprises the porous silicon composite and carbon.

In addition, the present invention provides a process for preparing a porous silicon composite, which comprises a first step of obtaining a silicon composite oxide powder using a silicon-based raw material and a magnesium-based raw material; a second step of etching the silicon composite oxide powder using an etching solution comprising a fluorine (F) atom-containing compound; and a third step of filtering and drying the composite obtained by the etching to obtain a porous silicon composite.

In addition, the present invention provides a process for preparing a porous silicon-carbon composite, which comprises a first step of obtaining a silicon composite oxide powder using a silicon-based raw material and a magnesium-based raw material; a second step of etching the silicon composite oxide powder using an etching solution comprising a fluorine (F) atom-containing compound; a third step of filtering and drying the composite obtained by the etching to obtain a porous silicon composite; and a fourth step of forming a carbon layer on the surface of the porous silicon composite by using a chemical thermal decomposition deposition method to obtain a porous silicon-carbon composite.

In addition, the present invention provides a negative electrode active material for a lithium secondary battery, which comprises the porous silicon-carbon composite.

Further, the present invention provides a lithium secondary battery, which comprises the negative electrode active material for a lithium secondary battery.

## Advantageous Effects of the Invention

According to the embodiment, as the porous silicon composite comprises silicon particles and a magnesium compound and has a molar ratio (O/Si) of oxygen (O) atoms to silicon (Si) atoms in the porous silicon composite controlled to a specific range, when it is used as a negative electrode active material of a secondary battery along with a binder and a conductive material to prepare a negative electrode active material composition, the dispersion stability is enhanced, such mechanical properties as strength are excellent, and the performance of a secondary battery can be enhanced when applied to a negative electrode active material.

According to another embodiment, the porous silicon-carbon composite comprising the porous silicon composite and carbon has significantly improved discharge capacity and initial efficiency as well as excellent capacity retention rate when applied to a negative electrode active material.

In addition, the process according to the embodiment has an advantage in that mass production is possible through a continuous process with minimized steps.

## Brief Description of the Drawing

The following drawings attached to the present specification illustrate preferred embodiments of the present invention and serve to further understand the technical idea of the present invention together with the description of the present invention. Accordingly, the present invention should not be construed as being limited only to those depicted in the drawings.

Fig. 1 is a field emission scanning electron microscopy (FE-SEM) photograph of the porous silicon composite (B4) prepared in Example 6.

Fig. 2 is an ion beam scanning electron microscope (FIB-SEM) photograph of the porous silicon composite (B4) prepared in Example 6.

Fig. 3 shows field emission scanning electron microscopy (FE-SEM) photographs of the surface of the porous silicon-carbon composite (C6) prepared in Example 6. They are shown in Figs. 3a to 3d according to the magnification, respectively.

Fig. 4 is an ion beam scanning electron microscope (FIB-SEM) photograph of the porous silicon-carbon composite (C6) prepared in Example 6.

Fig. 5 is an FIB-SEM EDAX photograph (a) of the porous silicon-carbon composite (C6) prepared in Example 6 and a table (b) of an analysis of the components in the composite.

Fig. 6 shows the measurement results of an X-ray diffraction analysis of the silicon composite oxide (A3) (a), the porous silicon composite (B4) (b), and the porous silicon-carbon composite (C6) (c) of Example 6.

Fig. 7 shows the measurement results of an X-ray diffraction analysis of the porous silicon-carbon composite (C3) of Example 3.

Figs. 8a and 8b show photographs of the porous silicon composite (B1) prepared in Example 1 in different magnifications as analyzed by scanning electron microscopy (SEM).

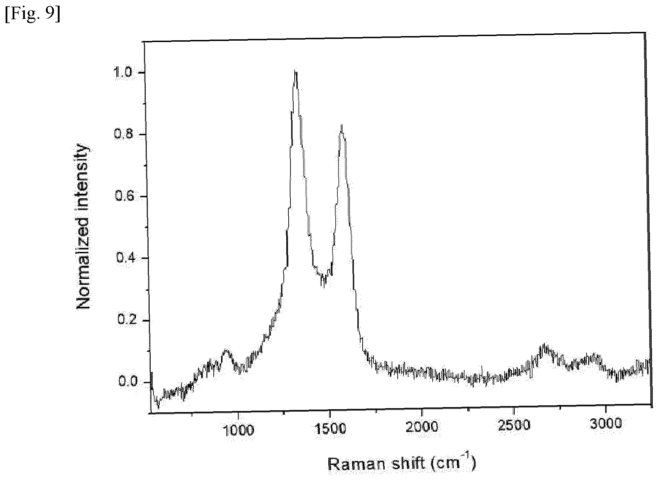

Fig. 9 shows the measurement results of a Raman analysis of the porous silicon-carbon composite (C1) of Example 1.

## Best Mode for Carrying out the Invention

The present invention is not limited to what is disclosed below. Rather, it may be modified in various forms as long as the gist of the invention is not altered.

In this specification, when a part is referred to as "comprising" an element, it is to be understood that the part may comprise other elements as well, unless otherwise indicated.

In addition, all numbers and expressions related to the quantities of components, reaction conditions, and the like used herein are to be understood as being modified by the term "about" unless otherwise indicated.

## [Porous silicon composite]

The porous silicon composite according to an embodiment of the present invention comprises silicon particles and a magnesium compound, wherein the molar ratio (O/Si) of oxygen (O) atoms to silicon (Si) atoms in the porous silicon composite is 0.01 to 0.35.

As the porous silicon composite comprises silicon particles and a magnesium compound together, it is possible to further enhance the performance of a secondary battery. Specifically, since the silicon particles charge lithium, the capacity of a secondary battery can be enhanced. Since the magnesium compound hardly reacts with lithium ions, it reduces the degree of expansion and contraction of the electrode and suppresses the volume expansion of silicon particles when lithium ions are absorbed, thereby producing an effect of enhancing the cycle characteristics (capacity retention rate).

In addition, the matrix, which is a continuous phase surrounding the silicon particles, is fortified in strength by the magnesium compound to suppress the volume expansion of the silicon particles, so that the volume change during occlusion and release of lithium ions is small, and the occurrence of cracks in the electrode active material can be minimized even upon repeated charging and discharging. Further, since the magnesium compound is disposed adjacent to the silicon particles, the contact of the silicon particles with the electrolyte solvent is minimized, and the reaction between the silicon particles and the electrolyte solvent is minimized, whereby it is possible to prevent a decrease in the initial charge and discharge efficiency and to suppress the expansion of silicon particles, thereby enhancing the capacity retention rate.

According to an embodiment of the present invention, the porous silicon composite may comprise a silicon aggregate in which silicon particles are interconnected with each other.

Specifically, the porous silicon composite may comprise a silicon aggregate having a three-dimensional (3D) structure in which two or more silicon particles are interconnected with each other. Since the silicon particles charge lithium, the capacity of a secondary battery may be decreased if silicon particles are not employed. In particular, if it comprises a silicon aggregate in which silicon particles are interconnected with each other, excellent mechanical properties such as strength can be obtained. In addition, the porous silicon composite may be easily dispersed when a negative electrode active material composition is prepared with a binder and a conductive material. When the negative electrode active material composition is applied on a current collector, its workability may be excellent.

In addition, the silicon aggregates may be uniformly distributed inside the porous silicon composite, and silicon particles that are not interconnected with each other may be contained. The silicon particles and/or silicon aggregates may be uniformly distributed inside the porous silicon composite. In such a case, excellent electrochemical properties such as charge and discharge may be achieved.

The silicon particles may comprise crystalline particles and may have a crystallite size of 1 nm to 20 nm in an X-ray diffraction analysis (converted from the X-ray diffraction analysis result).

Specifically, when the porous silicon composite according to an embodiment of the present invention is subjected to an X-ray diffraction (Cu-K$\alpha$) analysis using copper as a cathode target and calculated by the Scherrer equation based on a full width at half maximum (FWHM) of the diffraction peak of Si (220) around $2\theta = 47.5°$, the silicon particles may preferably have a crystallite size of 1 nm to 15 nm, more preferably, 1 nm to 10 nm.

If the crystallite size of the silicon particles is less than 1 nm, it is difficult to form micropores inside the porous silicon composite, it is not possible to suppress a reduction in the Coulombic efficiency, which represents the ratio of charge capacity to discharge capacity, and the specific surface area is too large, thereby making it impossible to prevent oxidation problems when they are handled in the atmosphere. In addition, if the crystallite size exceeds 20 nm, the micropores cannot adequately suppress the volume expansion of silicon particles that takes place during charging and discharging, and a reduction in the Coulombic efficiency, which represents the ratio of charge capacity to discharge capacity, due to repeated charging and discharging cannot be suppressed.

As the crystallite size of the silicon particles is made smaller within the above range, a denser composite can be obtained, which can enhance the strength of the matrix. Accordingly, in such a case, the performance of the secondary battery such as discharge capacity, initial efficiency, or cycle lifespan characteristics may be further enhanced.

In addition, the porous silicon composite may further comprise amorphous silicon or silicon in a similar phase thereto. The silicon particles may be uniformly distributed inside the porous silicon composite. In such a case, excellent electrochemical properties such as charge and discharge may be achieved.

Meanwhile, the porous silicon composite comprises a magnesium compound.

Since the magnesium compound hardly reacts with lithium ions during the charging and discharging of a secondary battery, it is possible to reduce the expansion and contraction of the electrode when lithium ions are occluded in the electrode, thereby enhancing the cycle characteristics of the secondary battery. In addition, the strength of the matrix, which is a continuous phase surrounding the silicon, can be fortified by the magnesium compound.

The magnesium compound may comprise a fluorine-containing magnesium compound.

The preferable characteristics of the porous silicon composite that comprises a fluorine-containing magnesium compound according to an embodiment of the present invention will be described below.

In general, silicon particles may occlude lithium ions during the charging of a secondary battery to form an alloy, which may increase the lattice constant and thereby expand the volume. In addition, during discharging of the secondary battery, lithium ions are released to return to the original metal nanoparticles, thereby reducing the lattice constant.

The fluorine-containing magnesium compound may be considered as a zero-strain material that does not accompany a change in the crystal lattice constant while lithium ions are occluded and released. The silicon particles may be present between the fluorine-containing magnesium compound particles and may be surrounded by the fluorine-containing magnesium compound particles.

In addition, the fluorine-containing magnesium compound does not release lithium ions during the charging of a lithium secondary battery. For example, it is also an inactive material that does not occlude or release lithium ions during the charging of a lithium secondary battery.

Lithium ions are released from the silicon particles, whereas lithium ions, which have been steeply increased during charging, are not released from the fluorine-containing magnesium compound. Thus, the porous matrix comprising a fluorine-containing magnesium compound does not participate in the chemical reaction of the battery, but it is expected to function as a body that suppresses the volume expansion of silicon particles during the charging of the secondary battery.

The fluorine-containing magnesium compound may comprise magnesium fluoride ($MgF_2$), magnesium fluoride silicate ($MgSiF_6$), or a mixture thereof. In addition, when the fluorine-containing magnesium compound is subjected to an X-ray diffraction (Cu-K$\alpha$) analysis using copper as a cathode target and calculated by the Scherrer equation based on a full width at half maximum (FWHM) of the diffraction peak of $MgF_2$ (111) around $2\theta = 40°$, $MgF_2$ may have a crystallite size of 2 nm to 35 nm, 5 nm to 25 nm, or 5 nm to 15 nm. If the crystallite size of $MgF_2$ is within the above range, it may function as a body for suppressing the volume expansion of silicon particles during the charging and discharging of the lithium secondary battery.

According to an embodiment of the present invention, in an X-ray diffraction (Cu-K$\alpha$) analysis using copper corresponding to an Si (220) crystal plane of the silicon particles as a cathode target, IB/IA as a ratio of the diffraction peak intensity (IB) corresponding to an $MgF_2$ (111) crystal plane around $2\theta = 40.4°$ to the diffraction peak intensity (IA) of Si (220) around $2\theta = 47.3°$ may be greater than 0 to 1. If IB/IA exceeds 1, there may be a problem in that the capacity of the secondary battery is deteriorated.

The magnesium compound may further comprise magnesium silicate and may comprise it more in the center of the porous silicon composite powder.

The magnesium silicate may comprise $MgSiO_3$, $Mg_2SiO_4$, or a mixture thereof.

In particular, as the porous silicon composite comprises $MgSiO_3$, the Coulombic efficiency or capacity retention rate may be increased.

The content of the magnesium silicate may be 0% by weight to 30% by weight, 0.5% by weight to 25% by weight, or 0.5% by weight to 20% by weight, based on the total weight of the porous silicon composite.

In the porous silicon composite according to an embodiment of the present invention, magnesium silicate may be converted to fluorine-containing magnesium compound by etching.

For example, some, most, or all of the magnesium silicate may be converted to fluorine-containing magnesium compound depending on the etching method or etching degree. More specifically, most of the magnesium silicate may be converted to fluorine-containing magnesium compound.

Meanwhile, the content of magnesium (Mg) in the porous silicon composite may be 0.2% by weight to 20% by weight, preferably, 0.2% by weight to 15% by weight, more preferably, 0.2% by weight to 10% by weight, based on the total weight of the porous silicon composite. If the content of magnesium (Mg) in the porous silicon composite is 0.2% by weight or more, the initial efficiency of the secondary battery may be enhanced. If it is 20% by weight or less, the charge and discharge capacity, cycle characteristics, and handling stability may be preferable.

Meanwhile, according to an embodiment of the present invention, it is possible to reduce the number of oxygen atoms present on the surface of the porous silicon composite. That is, the key feature of the present invention lies in that the molar ratio (O/Si) of oxygen (O) atoms to silicon (Si) atoms may be significantly reduced.

The molar ratio (O/Si) of oxygen (O) atoms to silicon (Si) atoms in the porous silicon composite may be 0.01 to 0.35. The molar ratio (O/Si) of oxygen (O) atoms to silicon (Si) atoms in the porous silicon composite may be preferably 0.01 to 0.25, more preferably, 0.01 to 0.10, even more preferably, 0.01 to 0.08.

According to an embodiment of the present invention, as the molar ratio (O/Si) of oxygen (O) atoms to silicon (Si) atoms is significantly reduced, the surface resistance can be reduced. As a result, when the porous silicon composite is applied to a negative electrode active material, it is preferable that the electrochemical properties of the secondary battery can be remarkably improved.

Specifically, according to an embodiment of the present invention, it is possible to remove most of the silicon dioxide contained in the porous silicon composite by etching. In such a case, the surface of the silicon particle may comprise silicon (Si) atoms in a very high fraction as compared with oxygen (O) atoms. That is, the molar ratio O/Si may be significantly reduced. As the porous silicon composite is used as a negative electrode active material, a secondary battery having excellent discharge capacity can be preferably obtained, and the initial efficiency of the secondary battery may be enhanced.

In general, as the ratio of oxygen decreases in a negative electrode active material comprising silicon, high discharge capacity may be achieved, whereas the volume expansion rate due to charging may be increased. On the other hand, as the ratio of oxygen increases, the volume expansion rate may be suppressed, whereas the discharge capacity may be decreased.

If the molar ratio (O/Si) of oxygen (O) atoms to silicon (Si) atoms satisfies the above range, the active phase attributed to silicon is increased, which increases the initial discharge capacity and initial efficiency of the secondary battery.

Specifically, according to an embodiment of the present invention, if the molar ratio (O/Si) of oxygen (O) atoms to silicon (Si) atoms of the porous silicon composite is 0.01 or more, expansion and contraction due to charging and discharging may be suppressed. Thus, when the porous silicon composite is used as a negative electrode active material, it is possible to suppress the delamination of the negative electrode active material from the negative electrode current collector. In addition, if the molar ratio (O/Si) of oxygen (O) atoms to silicon (Si) atoms is 0.35 or less, sufficient charge and discharge capacity can be secured, so that it is possible to maintain high charge and discharge characteristics.

The porous silicon composite may comprise a plurality of pores.

Since the porous silicon composite has a porous structure, it is possible to accommodate the volume expansion of silicon particles taking place during the charging and discharging of a secondary battery, thereby effectively alleviating and suppressing a problem caused by the volume expansion.

The porous silicon composite may comprise a plurality of pores in its interior, its surface, or both. The pores may be connected to each other in the silicon composite to form open pores.

When the surface of the porous silicon composite is measured by a gas adsorption method (BET plot method), it may comprise micropores of 2 nm or less and mesopores of greater than 2 nm to 50 nm.

The pore volume of the micropores of 2 nm or less may be 0.01 $cm^3$/g to 0.5 $cm^3$/g, preferably, 0.05 $cm^3$/g to 0.45 $cm^3$/g, more preferably, 0.1 $cm^3$/g to 0.4 $cm^3$/g.

The pore volume of the mesopores of greater than 2 nm to 50 nm may be 0.2 $cm^3$/g to 0.7 $cm^3$/g, preferably, 0.2 $cm^3$/g to 0.6 $cm^3$/g, more preferably, 0.2 $cm^3$/g to 0.5 $cm^3$/g.

If the pores comprise micropores of 2 nm or less and mesopores of greater than 2 nm to 50 that satisfy the pore volumes, the pores in the silicon composite may be uniform and contained in a large amount.

In addition, the pores may further comprise macropores of greater than 50 nm to 250 nm. The pore volume of the macropores of greater than 50 nm to 250 nm may be 0.01 $cm^3$/g to 0.3 $cm^3$/g, preferably, 0.01 $cm^3$/g to 0.2 $cm^3$/g, more preferably, 0.01 $cm^3$/g to 0.15 $cm^3$/g.

In addition, it is preferable that silicon particles and/or silicon aggregates in which silicon particles are interconnected with each other in the porous silicon composite are uniformly distributed in the interior of the porous silicon composite. As a result, the porous silicon composite has excellent mechanical properties such as strength. In addition, since it has a porous structure, it is possible to accommodate the volume expansion of silicon particles taking place during the charging and discharging of a secondary battery, thereby effectively alleviating and suppressing a problem caused by the volume expansion.

According to an embodiment of the present invention, the porous silicon composite may further comprise a silicon oxide compound.

The silicon oxide compound may be a silicon-based oxide represented by the formula $SiO_x$ ($0.5 \leq x \leq 2$). The silicon oxide compound may be specifically $SiO_x$ ($0.8 < x \leq 1.2$), more specifically $SiO_x$ ($0.9 < x \leq 1.1$). In the formula $SiO_x$, if the value of x is less than 0.5, expansion and contraction may be increased and lifespan characteristics may be deteriorated during the charging and discharging of the secondary battery. In addition, if x exceeds 2, there may be a problem in that the initial efficiency of the secondary battery is decreased as the amount of inactive oxides increases.

The silicon oxide compound may be employed in an amount of 0.1% by mole to 5% by mole based on the total weight of the porous silicon composite.

If the content of the silicon oxide compound is less than 0.1% by weight, the volume of the secondary battery may expand, and the lifespan characteristics thereof may be deteriorated. On the other hand, if the content of the silicon oxide compound exceeds 5% by weight, the initial irreversible reaction of the secondary battery may be increased, thereby deteriorating the initial efficiency.

In the present specification, the disposition of the silicon particles and the characteristics of the surface thereof may cover the disposition of the silicon aggregates and the surface of the silicon aggregates within a range that does not impair the effects of the present invention.

The porous silicon composite according to an embodiment of the present invention may further comprise a silicon oxide ($SiO_x$, $0.1 < x \leq 2$) formed on the surface of the silicon particles. The silicon oxide ($SiO_x$, $0.1 < x \leq 2$) may be formed by oxidation of the silicon.

The content of oxygen (O) in the porous silicon composite may be 0.1% by weight to 15% by weight, preferably, 0.5% by weight to 10% by weight, more preferably, 0.5% by weight to 8% by weight, based on the total weight of the porous silicon composite. If the content of oxygen (O) in the porous silicon composite is less than 0.1% by weight, the degree of expansion is increased during charging of the secondary battery, which is not preferable because the cycle characteristics are deteriorated. If the content of oxygen (O) in the porous silicon composite exceeds 15% by weight, when the porous silicon composite is used as a negative electrode active material, an irreversible reaction with lithium increases, which deteriorates the initial charge and discharge efficiency, it may be readily delaminated from the negative electrode current collector, and there may be a concern that the charge and discharge cycle is deteriorated.

The porous silicon composite may have an average particle diameter ($D_{50}$) of 1 $\mu$m to 15 $\mu$m, preferably, 2 $\mu$m to 10 $\mu$m, more preferably, 3 $\mu$m to 8 $\mu$m. If the average particle diameter ($D_{50}$) of the porous silicon composite exceeds 15 $\mu$m, the expansion of the porous silicon composite due to charging of lithium ions becomes severe, and the binding capability between the particles in the composite and the binding capability between the particles and the current collector are deteriorated as charging and discharging are repeated, so that the lifespan characteristics may be significantly reduced. In addition, there is a concern that the activity may be deteriorated due to a decrease in the specific surface area. If the average particle diameter ($D_{50}$) of the porous silicon composite is less than 1 $\mu$m, there is a concern that the dispersibility may be deteriorated due to the aggregation of the porous silicon composite during the preparation of a negative electrode slurry (i.e., a negative electrode active material composition) using the same.

The porous silicon composite may have a specific gravity of 1.5 g/$cm^3$ to 2.3 g/$cm^3$, preferably, 1.6 g/$cm^3$ to 2.3 g/$cm^3$, more preferably, 1.6 g/$cm^3$ to 2.2 g/$cm^3$.

Here, specific gravity may refer to particle density, density, or true density. According to an embodiment of the present invention, for the measurement of specific gravity, for example, the measurement of specific gravity by a dry density meter, Acupick II1340 manufactured by Shimadzu Corporation may be used as a dry density meter. The purge gas to be used may be helium gas, and the measurement may be carried out after 200 times of purge in a sample holder set at a temperature of 23°C.

If the specific gravity of the porous silicon composite is 1.5 g/$cm^3$ or more, it is possible to suppress a deterioration in the cycle characteristics of the secondary battery. If the specific gravity is 2.3 g/$cm^3$ or less, the impregnability of an electrolyte is enhanced, which increases the utilization rate of the negative electrode active material, so that the initial charge and discharge capacity can be enhanced.

The porous silicon composite may have a specific surface area (Brunauer-Emmett-Teller method; BET) of 100 $m^2$/g to 1,600 $m^2$/g, preferably, 200 $m^2$/g to 1,400 $m^2$/g, more preferably, 300 $m^2$/g to 1,200 $m^2$/g. If the specific surface area of the porous silicon composite is less than 100 $m^2$/g, the rate characteristics of the secondary battery may be deteriorated. If it exceeds 1,600 m$^2$/g, it may be difficult to prepare a negative electrode slurry suitable for application to a negative electrode current collector of the secondary battery, the contact area with an electrolyte is increased, and the decomposition reaction of the electrolyte may be accelerated or a side reaction of the secondary battery may be caused.

The specific surface area of the porous silicon composite may be obtained from the sum of the surface area of the particle surface of the porous silicon composite and the surface area of the pores (micropores, macropores, and mesopores) present on the surface and inside of the porous silicon composite.

**[Porous silicon-carbon composite]**

According to an embodiment of the present invention, there is provided a porous silicon-carbon composite, which comprises the porous silicon composite and carbon.

Specifically, the porous silicon-carbon composite may comprise a porous silicon composite comprising silicon particles and a magnesium compound wherein the molar ratio (O/Si) of oxygen (O) atoms to silicon (Si) atoms in the porous silicon composite is 0.01 to 0.35; and carbon.

The molar ratio (O/Si) of oxygen (O) atoms to silicon (Si) atoms in the porous silicon-carbon composite may be the same as, or slightly different from, the molar ratio (O/Si) of oxygen (O) atoms to silicon (Si) atoms in the silicon composite. That is, the molar ratio (O/Si) of oxygen (O) atoms to silicon (Si) atoms in the porous silicon-carbon composite may be 0.01 to 0.35. When the porous silicon-carbon composite in which the molar ratio (O/Si) of oxygen (O) atoms to silicon (Si) atoms satisfies the above range is applied to a negative electrode active material, it is possible to significantly enhance the discharge capacity and initial efficiency while an excellent capacity retention rate is maintained.

The molar ratio (O/Si) of oxygen (O) atoms to silicon (Si) atoms in the porous silicon-carbon composite may be preferably 0.01 to 0.25, more preferably, 0.01 to 0.10, even more preferably, 0.01 to 0.08.

According to an embodiment of the present invention, if the molar ratio (O/Si) of oxygen (O) atoms to silicon (Si) atoms in the porous silicon-carbon composite is 0.01 or more, expansion and contraction due to charging and discharging may be suppressed. Thus, when the porous silicon-carbon composite is used as a negative electrode active material, it is possible to suppress the delamination of the negative electrode active material from the negative electrode current collector. In addition, if the molar ratio (O/Si) of oxygen (O) atoms to silicon (Si) atoms is 0.35 or less, discharge capacity can be secured, so that it is possible to maintain high charge and discharge characteristics.

In addition, the porous silicon-carbon composite is a composite in which silicon aggregates, in which a plurality of silicon particles are interconnected with each other, are uniformly distributed in a composite whose structure is in the form of a single mass, for example, a polyhedral, spherical, or similar shape. It may be in a single composite in which carbon, more specifically, a carbon layer comprising carbon surrounds a part or all of the surfaces of one or more silicon particles or the surfaces of secondary silicon particles (silicon aggregates) formed by the aggregation of two or more silicon particles.

In the porous silicon-carbon composite, the volume expansion that takes place during the charging and discharging of the secondary battery is concentrated on the pores rather than the outer part of the negative electrode active material, thereby effectively controlling the volume expansion and enhancing the lifespan characteristics of the lithium secondary battery. In addition, the electrolyte can easily penetrate into the porous structure to enhance the output characteristics, so that the performance of the lithium secondary battery can be further enhanced.

In the present specification, pores may be used interchangeably with voids. In addition, the pores may comprise closed pores. The closed pores refer to independent pores that are not connected to other pores because all of the walls of the pores are formed in a closed structure. In addition, the pores may further comprise open pores. The open pores are formed in an open structure in which at least a part of the walls of the pores are open, so that they may be, or may not be, connected to other pores. In addition, they may refer to pores exposed to the outside as they are disposed on the surface of the silicon composite.

The porous silicon-carbon composite may have a porosity of 0.5% by volume to 40% by volume based on the volume of the porous silicon-carbon composite. The porosity may be a porosity of the closed pores in the porous silicon-carbon composite. Specifically, the porosity of the porous silicon-carbon composite may be preferably 0.5% by volume to 30% by volume, more preferably 1% by volume to 15% by volume, based on the volume of the porous silicon-carbon composite.

Here, porosity refers to "(pore volume per unit mass)/ I (specific volume + pore volume per unit mass)}." It may be measured by a mercury porosimetry method or a Brunauer- Emmett-Teller (BET) measurement method.

In the present specification, the specific volume is calculated as 1/(particle density) of a sample. The pore volume per unit mass is measured by the BET method to calculate the porosity (%) from the above equation.

If the porosity of the porous silicon-carbon composite satisfies the above range, it is possible to obtain a buffering effect of volume expansion while maintaining sufficient mechanical strength when it is applied to the negative electrode active material of a secondary battery. Thus, it is possible to minimize the problem of volume expansion due to the use of silicon particles, to achieve high capacity, and to enhance the lifespan characteristics. If the porosity of the porous silicon-carbon composite is less than 0.5% by volume, it may be difficult to control the volume expansion of the negative electrode active material during charging and discharging. If it exceeds 40% by volume, the mechanical strength is reduced due to a large number of pores present in the negative electrode active material, and there is a concern that the negative electrode active material may be collapsed in the process of manufacturing a secondary battery, for example, during the mixing of the negative electrode active material slurry and the rolling step after coating.

The porous silicon-carbon composite may comprise a plurality of pores, and the diameters of the pores may be the same as, or different from, each other.

In the porous silicon-carbon composite, the carbon may be present on the surface of at least one selected from the group consisting of the silicon particles and magnesium compound contained in the porous silicon composite. In addition, the carbon may be present on the surface of the silicon aggregates contained in the porous silicon-carbon composite.

In addition, the carbon may serve as a matrix, and the silicon particles, magnesium compound, and pores may be dispersed in the carbon matrix.

Specifically, the porous silicon-carbon composite may have a sea-island structure in which the silicon particles or closed pores (v) form islands and carbon forms a sea. The pores comprise open pores and closed pores. The closed pores may comprise pores whose inside is not coated with carbon.

In addition, the carbon is present on the surface of at least one selected from the group consisting of the silicon particles and magnesium compound contained in the porous silicon composite. The carbon may serve as a matrix, and the silicon particles, magnesium compound, and pores may be dispersed in the carbon matrix.

In the porous silicon-carbon composite, the carbon may be present on the surface of the porous silicon composite or inside the open pores.

The state in which the silicon particles or carbon are uniformly dispersed is confirmed through image observation of a dark field image or a bright field image by a transmission electron microscope (TEM). In addition, the state in which pores are uniformly dispersed inside the porous silicon-carbon composite is also confirmed through the above-described image observation.

In addition, if a silicon oxide ($SiO_x$, $0.1 < x \leq 2$) formed on the surface of the silicon particles is further contained, the carbon may be present on the surface of the silicon oxide ($SiO_x$, $0.1 < x \leq 2$).

The carbon may further form a carbon layer on the surface of the porous silicon composite.

As the porous silicon-carbon composite comprises a carbon layer, it is possible to solve the difficulty of electrical contact between particles due to the presence of pores and to provide excellent electrical conductivity even after the electrode has been expanded during charging and discharging, so that the performance of the secondary battery can be further enhanced.

In addition, according to an embodiment of the present invention, the thickness of the carbon layer or the amount of carbon may be controlled, so that it is possible to achieve appropriate electrical conductivity, as well as to prevent a deterioration of the lifespan characteristics, to thereby achieve a high-capacity negative electrode active material.

Meanwhile, since the surfaces of the porous silicon composite particles or the inside thereof and the pores therein may be covered by carbon coating, the specific surface area of the porous silicon-carbon composite may vary significantly.

The porous silicon-carbon composite may have a specific surface area (Brunauer-Emmett-Teller method; BET) of 3 m$^2$/g to 50 m$^2$/g, preferably, or 3 m$^2$/g to 40 m$^2$/g. If the specific surface area of the porous silicon-carbon composite is less than 3 m$^2$/g, the rate characteristics of the secondary battery may be deteriorated. If it exceeds 50 m$^2$/g, it may be difficult to prepare a negative electrode slurry suitable for application to a negative electrode current collector of the secondary battery, the contact area with an electrolyte increases, and the decomposition reaction of the electrolyte may be accelerated or a side reaction of the secondary battery may be caused.

The porous silicon-carbon composite may have a specific gravity of 1.8 g/cm$^3$ to 2.5 g/cm$^3$, preferably, 2.0 g/cm$^3$ to 2.5 g/cm$^3$, more preferably, 2.0 g/cm$^3$ to 2.4 g/cm$^3$. The specific gravity may vary depending on the coating amount of a carbon layer. While the amount of carbon is fixed, the greater the specific gravity within the above range, the fewer pores in the composite. Therefore, when it is used as a negative electrode active material, the conductivity is enhanced, and the strength of the matrix is fortified, thereby enhancing the initial efficiency and cycle lifespan characteristics. In such an event, specific gravity may refer to particle density, density, or true density. The measurement method is as described above.

If the specific gravity of the porous silicon-carbon composite is 1.8 g/cm$^3$ or more, the dissociation between the negative electrode active material powder due to volume expansion of the negative electrode active material powder during charging may be prevented, and the cycle deterioration may be suppressed. If the specific gravity is 2.5 g/cm$^3$ or less, the impregnability of an electrolyte is enhanced, which increases the utilization rate of the negative electrode active material, so that the initial charge and discharge capacity can be enhanced.

Since the porous silicon-carbon composite according to an embodiment of the present invention has a porous structure, an electrolyte can easily penetrate into the porous structure to enhance the output characteristics. Thus, the porous silicon-carbon composite can be advantageously used in the preparation of a negative electrode active material for a lithium secondary battery and a lithium secondary battery comprising the same.

Meanwhile, in the porous silicon-carbon composite, the content of silicon (Si) may be 30% by weight to 90% by weight, 30% by weight to 80% by weight, or 30% by weight to 70% by weight, based on the total weight of the porous silicon-carbon composite.

If the content of silicon (Si) is less than 30% by weight, the amount of an active material for occlusion and release of lithium is small, which may reduce the charge and discharge capacity of the lithium secondary battery. On the other hand, if it exceeds 90% by weight, the charging and discharge capacity of the lithium secondary battery may be increased, whereas the expansion and contraction of the electrode during charging and discharging may be excessively increased, and the negative electrode active material powder may be further atomized, which may deteriorate the cycle characteristics.

The content of magnesium (Mg) in the porous silicon-carbon composite may be 0.2% by weight to 20% by weight, 0.2% by weight to 15% by weight, or 0.2% by weight to 6% by weight, based on the total weight of the porous silicon-carbon composite. If the content of magnesium (Mg) in the porous silicon-carbon composite is less than 0.2% by weight, the initial efficiency of the secondary battery may be reduced. If it exceeds 20% by weight, there may be a problem in that the capacity of the secondary battery is reduced. If the content of magnesium (Mg) in the porous silicon-carbon composite satisfies the above range, it is possible to further enhance the performance of the secondary battery.

Meanwhile, according to an embodiment of the present invention, the porous silicon-carbon composite may comprise a fluoride and/or silicate containing a metal other than magnesium. The other metals may be at least one selected from the group consisting of alkali metals, alkaline earth metals, Groups 13 to 16 elements, transition metals, rare earth elements, and combinations thereof. Specific examples thereof may include Li, Ca, Sr, Ba, Y, Ti, Zr, Hf, V, Nb, Cr, Mo, W, Fe, Pb, Ru, Ir, Pd, Pt, Cu, Ag, Au, Zn, Cd, B, Al, Ga, Sn, In, Ge, P, As, Sb, Bi, S, and Se.

The content of carbon (C) may be 10% by weight to 90% by weight based on the total weight of the porous silicon-carbon composite. Specifically, the content of carbon (C) may be 10% by weight to 70% by weight, 15% by weight to 60% by weight, or 20% by weight to 50% by weight, based on the total weight of the porous silicon-carbon composite.

If the content of carbon (C) is less than 10% by weight, a sufficient effect of enhancing conductivity cannot be expected, and there is a concern that the electrode lifespan of the lithium secondary battery may be deteriorated. In addition, if it exceeds 90% by weight, the discharge capacity of the secondary battery may be decreased and the bulk density may be decreased, so that the charge and discharge capacity per unit volume may be deteriorated.

The carbon layer may have a thickness of 1 nm to 300 nm. The thickness of the carbon layer may be preferably 1 nm to 40 nm, more preferably 1 nm to 30 nm. If the thickness of the carbon layer is 1 nm or more, an enhancement in conductivity may be achieved. If it is 300 nm or less, a decrease in the capacity of the secondary battery may be suppressed.

The average thickness of the carbon layer may be measured, for example, by the following procedure.

First, the negative electrode active material is observed at an arbitrary magnification by a transmission electron microscope (TEM). The magnification is preferably, for example, a degree that can be confirmed with the naked eyes. Subsequently, the thickness of the carbon layer is measured at arbitrary 15 points. In such an event, it is preferable to select the measurement positions at random widely as much as possible, without concentrating on a specific region. Finally, the average value of the thicknesses of the carbon layer at the 15 points is calculated.

The carbon layer may comprise at least one selected from the group consisting of graphene, reduced graphene oxide, a carbon nanotube, a carbon nanofiber, and graphite. Specifically, it may comprise graphene. The at least one selected from the group consisting of graphene, reduced graphene oxide, a carbon nanotube, a carbon nanofiber, and graphite may be contained not only in the carbon layer present on the surface of the porous silicon composite, but also on the surfaces of the silicon particles and in the carbon matrix.

The porous silicon-carbon composite may have an average particle diameter ($D_{50}$) of 2 $\mu$m to 15 $\mu$m. In addition, the average particle diameter ($D_{50}$) is a value measured as a diameter average value ($D_{50}$), i.e., a particle size or median diameter when the cumulative volume is 50% in particle size distribution measurement according to a laser beam diffraction method. Specifically, the average particle diameter ($D_{50}$) may be preferably 3 $\mu$m to 10 $\mu$m, more preferably 3 $\mu$m to 8 $\mu$m. If the average particle diameter ($D_{50}$) is less than 2 $\mu$m, there is a concern that the dispersibility may be deteriorated due to the aggregation of particles of the porous silicon-carbon composite during the preparation of a negative electrode slurry (i.e., a negative electrode active material composition) using the same. On the other hand, if $D_{50}$ exceeds 15 $\mu$m, the expansion of the composite particles due to charging of lithium ions becomes severe, and the binding capability between the particles of the composite and the binding capability between the particles and the current collector are deteriorated as charging and discharging are repeated, so that the lifespan characteristics may be significantly reduced. In addition, there may be a concern that the activity may be deteriorated due to a decrease in the specific surface area. More specifically, in view of the remarkable improvement effect of the optimization of the average particle

diameter ($D_{50}$) of the porous silicon-carbon composite, the average particle diameter ($D_{50}$) of the porous silicon-carbon composite particles may be 3 $\mu$m to 6 $\mu$m.

A secondary battery using the porous silicon-carbon composite as a negative electrode may further enhance its discharge capacity, initial efficiency, and capacity retention rate.

**[Process for preparing a porous silicon composite]**

The process for preparing a porous silicon composite comprises a first step of obtaining a silicon composite oxide powder using a silicon-based raw material and a magnesium-based raw material; a second step of etching the silicon composite oxide powder using an etching solution comprising a fluorine (F) atom-containing compound; and a third step of filtering and drying the composite obtained by the etching to obtain a porous silicon composite.

The process according to an embodiment has an advantage in that mass production is possible through a continuous process with minimized steps.

Specifically, in the process for preparing a porous silicon composite, the first step may comprise obtaining a silicon composite oxide powder using a silicon-based raw material and a magnesium-based raw material. The first step may be carried out by, for example, using the method described in Korean Laid-open Patent Publication No. 2018-0106485.

According to an embodiment of the present invention, the silicon composite oxide powder may comprise magnesium silicate.

The content of magnesium (Mg) in the silicon composite oxide powder may be 0.2% by weight to 20% by weight, 0.2% by weight to 15% by weight, or 0.2% by weight to 10% by weight, based on the total weight of the silicon composite oxide. If the content of magnesium (Mg) in the silicon composite oxide satisfies the above range, the molar ratio (O/Si) of oxygen (O) atoms to silicon (Si) atoms in the porous silicon composite may satisfy the range to be achieved according to an embodiment of the present invention. In such an event, it is possible to further enhance the performance of a secondary battery such as the discharge capacity, initial charge and discharge efficiency, and capacity retention rate of the secondary battery.

According to an embodiment of the present invention, the process may further comprise forming a carbon layer on the surface of the silicon composite oxide by using a chemical thermal decomposition deposition method.

Specifically, once a carbon layer has been formed on the surface of the silicon composite oxide powder comprising the silicon particles, the etching process of the second step may be carried out. In such a case, there may be an advantage in that uniform etching is possible and a high yield may be obtained.

The step of forming a carbon layer may be carried out by a process similar or identical to the process of forming a carbon layer in the fourth step of the process for preparing a porous silicon-carbon composite to be described below.

In the process for preparing a porous silicon composite, the second step may comprise etching the silicon composite oxide powder using an etching solution comprising a fluorine (F) atom-containing compound.

The etching step may comprise dry etching and wet etching.

If dry etching is used, selective etching may be possible.

Silicon dioxide of the silicon composite oxide powder is dissolved and eluted by the etching step to thereby form pores. That is, the silicon composite oxide powder is etched using an etching solution comprising a fluorine (F) atom-containing compound in the etching step to thereby form pores.

In addition, the magnesium silicate is converted to fluorine-containing magnesium compound by the etching step, so that a porous silicon composite comprising silicon particles and a fluorine-containing magnesium compound may be prepared.

If the silicon composite oxide powder is etched using a fluorine (F) atom-containing compound (e.g., HF), a part of magnesium silicate is converted to a fluorine-containing magnesium compound, and pores are formed at the same time in the portion from which silicon dioxide has been eluted and removed. As a result, a porous silicon composite comprising silicon particles, magnesium silicate, and fluorine-containing magnesium compound may be prepared.

For example, in the etching step in which HF is used, when dry etching is carried out, it may be represented by the following Reaction Schemes G1 and G2, and when wet etching is carried out, it may be represented by the following Reaction Schemes L1a to L2:

$$MgSi_3 + 6HF \text{ (gas)} \rightarrow SiF_4 \text{ (g)} + MgF_2 + 3H_2O \quad \text{(G1)}$$

$$Mg_2SiO_4 + 8HF \text{ (gas)} \rightarrow SiF_4 \text{ (g)} + 2MgF_2 + 4H_2O \quad \text{(G2)}$$

$$MgSiO_3 + 6HF \text{ (aq. solution)} \rightarrow MgSiF_6 + 3H_2O \quad \text{(L1a)}$$

$$MgSiF_6 + 2HF \text{ (aq. solution)} \rightarrow MgF_2 + H_2SiF_6 \quad \text{(L1b)}$$

$$MgSiO_3 + 2HF \rightarrow SiO_2 + MgF_2 + H_2O \text{ (L1c)}$$

$$SiO_2 + 6HF \text{ (1)} \rightarrow H_2SiF_6 + 2H_2O \text{ (L1d)}$$

$$MgSiO_3 + 8HF \text{ (aq. solution)} \rightarrow MgF_2 + H_2SiF_6 + 3H_2O \text{ (L1)}$$

$$Mg_2SiO_4 + 8HF \text{ (aq. solution)} \rightarrow MgSiF_6 + MgF_2 + 4H_2O \text{ (L2a)}$$

$$MgSiF_6 + 2HF \text{ (aq. solution)} \rightarrow MgF_2 + H_2SiF_6 \text{ (L2b)}$$

$$Mg_2SiO_4 + 4HF \text{ (aq. solution)} \rightarrow SiO_2 + 2MgF_2 + 2H_2O \text{ (L2c)}$$

$$SiO_2 + 6HF \text{ (aq. solution)} \rightarrow H_2SiF_6 + 2H_2O \text{ (L2d)}$$

$$Mg_2SiO_4 + 10HF \text{ (aq. solution)} \rightarrow 2MgF_2 + H_2SiF_6 + 4H_2O \text{ (L2)}$$

In addition, pores may be considered to be formed by the following Reaction Schemes (2) and (3).

$$SiO_2 + 4HF \text{ (gas)} \rightarrow SiF_4 + 2H_2O \text{ (2)}$$

$$SiO_2 + 6HF \text{ (aq. solution)} \rightarrow H_2SiF_6 + 2H_2O \text{ (3)}$$

Pores (voids) may be formed where silicon dioxide is dissolved and removed in the form of $SiF_4$ and $H_2SiF_6$ by the reaction mechanism as in the above reaction schemes.

In addition, silicon dioxide contained in the porous silicon composite may be removed depending on the degree of etching, and pores may be formed therein.

The degree of formation of pores may vary with the degree of etching.

In addition, the ratio of O/Si and specific surface area of the porous silicon composite before and after etching may significantly vary, respectively.

In addition, the specific surface area and specific gravity in the porous silicon composite in which pores are formed may significantly vary before and after the coating of carbon.

It is possible to obtain a porous silicon composite powder having a plurality of pores formed on the surface of the porous silicon composite particles, or on the surface and inside thereof, through the etching.

Here, etching refers to a process in which the silicon composite oxide powder is treated with an acidic aqueous solution containing an acid, for example, an etching solution containing a fluorine (F) atom-containing compound in the solution as an acidic aqueous solution.

A commonly used etching solution containing a fluorine atom may be used without limitation within a range that does not impair the effects of the present invention as the etching solution containing a fluorine (F) atom-containing compound.

Specifically, the fluorine (F) atom-containing compound may comprise at least one selected from the group consisting of HF, $NH_4F$, and $HF_2$. As the fluorine (F) atom-containing compound is used, the porous silicon composite may comprise fluorine-containing magnesium compound, and the etching step may be carried out more quickly.

The etching solution may further comprise one or more acids selected from the group consisting of organic acids, sulfuric acid, hydrochloric acid, phosphoric acid, nitric acid, and chromic acid.

As the etching conditions, the stirring temperature (processing temperature) may be, for example, 10°C to 90°C, preferably, 10°C to 80°C, more preferably, 20°C to 70°C.

The porous silicon composite obtained upon the etching may comprise silicon particles that are porous.

It is possible to obtain a porous silicon composite having a plurality of pores formed on the surface, inside, or both of the porous silicon composite through the etching. Here, the porous silicon composite may have a three-dimensional (3D) structure in which two or more silicon particles are interconnected with each other. In addition, it is characterized in that the average particle diameter of the porous silicon composite hardly changes by etching.

That is, the average particle diameter of the silicon composite oxide powder before etching and the average particle diameter of the porous silicon composite obtained by etching are approximately the same. The difference (change) in the average particle diameter of the silicon composite oxide powder and that of the porous silicon composite may be within about 5%.

In addition, the number of oxygen present on the surface of the porous silicon composite may be lowered by the etching. That is, it is possible to significantly lower the oxygen fraction on the surface of the porous silicon composite and to reduce the surface resistance through the etching. As a result, when the porous silicon composite is applied to a negative electrode active material, the electrochemical properties, particularly, lifespan characteristics of the lithium secondary battery can be remarkably improved.

In addition, as the selective etching removes a large amount of silicon dioxide, the silicon particles or silicon aggregates may comprise silicon (Si) in a very high fraction as compared with oxygen (O) on their surface. That is, the molar ratio (O/Si) of oxygen (O) atoms to silicon (Si) atoms present in the porous silicon composite may be significantly reduced. In such an event, it is possible to obtain a secondary battery having an excellent capacity retention rate and enhanced discharge capacity and initial efficiency.

In the process for preparing the porous silicon composite, the third step may comprise filtering and drying the product obtained by the etching to obtain a porous silicon composite. The filtration and drying step may be carried out by a commonly used method.

The process according to an embodiment of the present invention has an advantage in that mass production is possible through a continuous process with minimized steps.

## [Process for preparing a porous silicon-carbon composite]

According to an embodiment of the present invention, there is provided a process for preparing a porous silicon-carbon composite using the porous silicon composite.

The process for preparing a porous silicon-carbon composite according to an embodiment of the present invention comprises a first step of obtaining a silicon composite oxide powder using a silicon-based raw material and a magnesium-based raw material; a second step of etching the silicon composite oxide powder using an etching solution comprising a fluorine (F) atom-containing compound; a third step of filtering and drying the composite obtained by the etching to obtain a porous silicon composite; and a fourth step of forming a carbon layer on the surface of the porous silicon composite by using a chemical thermal decomposition deposition method to obtain a porous silicon-carbon composite.

The electrical contact between the particles of the porous silicon-carbon composite may be enhanced by the step of formation of a carbon layer. In addition, as the charge and discharge are carried out, excellent electrical conductivity may be imparted even after the electrode is expanded, so that the performance of the secondary battery can be further enhanced. Specifically, the carbon layer may increase the conductivity of the negative electrode active material to enhance the output characteristics and cycle characteristics of the battery and may increase the stress relaxation effect when the volume of the active material is changed. Hereinafter, the process for preparing a porous silicon-carbon composite will be described in detail.

The first to third steps are the same as those described in the process for preparing a porous silicon composite. In the process for preparing a porous silicon-carbon composite, the fourth step may comprise forming a carbon layer on the surface of the porous silicon composite by using a chemical thermal decomposition deposition method.

The carbon layer may comprise at least one selected from the group consisting of graphene, reduced graphene oxide, a carbon nanotube, a carbon nanofiber, and graphite.

The step of formation of a carbon layer may be carried out by injecting at least one carbon source gas selected from a compound represented by the following Formulae 1 to 3 and carrying out a reaction of the porous silicon composite obtained in the third step in a gaseous state at 400°C to 1,200°C.

$$[\text{Formula 1}] \qquad C_NH_{(2N+2-A)}[OH]_A$$

in Formula 1, N is an integer of 1 to 20, and A is 0 or 1,

$$[\text{Formula 2}] \qquad C_NH_{(2N-B)}$$

in Formula 2,
N is an integer of 2 to 6, and B is an integer of 0 to 2,

$$[\text{Formula 3}] \qquad C_xH_yO_z$$

in Formula 3, x is an integer of 1 to 20, y is an integer of 0 to 25, and z is an integer of 0 to 5.

The compound represented by Formula 1 may be at least one selected from the group consisting of methane, ethane, propane, butane, methanol, ethanol, propanol, propanediol, and butanediol. The compound represented by Formula 2 may be at least one selected from the group consisting of ethylene, acetylene, propylene, butylene, butadiene, and cyclopentene. The compound represented by Formula 3 may be at least one selected from the group consisting of benzene, toluene, xylene, ethylbenzene, naphthalene, anthracene, and dibutyl hydroxy toluene (BHT).

In addition, a carbon coating may be uniformly formed on the surface of the pores in the interior of the porous silicon-carbon composite. This is preferable since the cycle lifespan is further enhanced.

The carbon source gas may further comprise at least one inert gas selected from hydrogen, nitrogen, helium, and argon. The reaction may be carried out, for example, at 400°C to 1,200°C, specifically, 500°C to 1,100°C, more specifically, 600°C to 1,000°C.

The reaction time (or thermal treatment time) may be appropriately adjusted depending on the desired amount of carbon coating. For example, the reaction time may be 10 minutes to 100 hours, specifically, 30 minutes to 90 hours, more specifically, 50 minutes to 40 hours, but it is not limited thereto.

In the process for preparing a porous silicon-carbon composite according to an embodiment of the present invention, it is possible to form a thin and uniform carbon layer comprising at least one selected from graphene, reduced graphene oxide, a carbon nanotube, a carbon nanofiber, and graphite as a main component on the surface of the silicon composite even at a relatively low temperature through a gas-phase reaction of the carbon source gas. In addition, the detachment reaction in the carbon layer does not substantially take place.

In addition, since a carbon layer is uniformly formed over the entire surface of the porous silicon composite through the gas-phase reaction, a carbon film (carbon layer) having high crystallinity can be formed. Thus, when the porous silicon-carbon composite is used as a negative electrode active material, the electrical conductivity of the negative electrode active material can be enhanced without changing the structure.

According to an embodiment of the present invention, when a reactive gas containing the carbon source gas and an inert gas is supplied to the surface of the silicon composite, the reactive gas penetrates into the open pores of the silicon composite, and one or more graphene-containing materials selected from graphene, reduced graphene oxide, and graphene oxide, and a conductive carbon material such as a carbon nanotube and a carbon nanofiber are grown on the surface of the porous silicon composite. For example, as the reaction time elapses, the conductive carbon material deposited on the surface of silicon in the porous silicon composite is gradually grown to obtain a porous silicon-carbon composite.

The specific surface area of the porous silicon-carbon composite may decrease according to the amount of carbon coating.

The structure of the graphene-containing material may be a layer, a nanosheet type, or a structure in which several flakes are mixed.

If a carbon layer comprising a graphene-containing material is uniformly formed over the entire surface of the silicon composite, it is possible to suppress the volume expansion as a graphene-containing material that has enhanced conductivity and is flexible for volume expansion is directly grown on the surface of silicon aggregates, silicon particles, and/or fluorine-containing magnesium compound. In addition, the coating of a carbon layer may reduce the chance that silicon directly meets the electrolyte, thereby reducing the formation of a solid electrolyte interphase (SEI) layer.

In addition, according to an embodiment of the present invention, the process may further comprise, after the fourth step (after the formation of a carbon layer in the fourth step), pulverizing or crushing and classifying the porous silicon-carbon composite such that the average particle diameter of the porous silicon-carbon composite is 2 $\mu$m to 15 $\mu$m. The classification may be carried out to adjust the particle size distribution of the porous silicon-carbon composite, for which dry classification, wet classification, or classification using a sieve may be used. In the dry classification, the steps of dispersion, separation, collection (separation of solids and gases), and discharge are carried out sequentially or simultaneously using an air stream, in which pretreatment (adjustment of moisture, dispersibility, humidity, and the like) may be carried out prior to the classification so as not to decrease the classification efficiency caused by interference between particles, particle shape, airflow disturbance, velocity distribution, and influence of static electricity, and the like, to thereby adjust the moisture or oxygen concentration in the air stream used. In addition, a desired particle size distribution may be obtained by carrying out crushing or pulverization and classification of the porous silicon-carbon composite at one time. After the crushing or pulverization, it is effective to divide the coarse powder part and the granular part with a classifier or sieve.

The process according to an embodiment of the present invention has an advantage in that mass production is possible through a continuous process with minimized steps.

A secondary battery using the porous silicon-carbon composite as a negative electrode may enhance its capacity, capacity retention rate, and initial efficiency.

**Negative electrode active material**

The negative electrode active material according to an embodiment of the present invention may comprise the porous silicon composite.

In addition, the negative electrode active material according to an embodiment of the present invention may comprise the porous silicon-carbon composite.

In addition, the negative electrode active material may further comprise a carbon-based negative electrode material, specifically, a graphite-based negative electrode material.

The negative electrode active material may be used as a mixture of the porous silicon composite or the porous silicon-carbon composite and the carbon-based negative electrode material, for example, a graphite-based negative electrode material. In such an event, the electrical resistance of the negative electrode active material can be reduced, while the expansion stress involved in charging can be relieved at the same time. The carbon-based negative electrode material may comprise, for example, at least one selected from the group consisting of natural graphite, synthetic graphite, soft carbon, hard carbon, mesocarbon, carbon fiber, carbon nanotube, pyrolytic carbon, coke, glass carbon fiber, sintered organic high molecular compound, and carbon black.

The content of the carbon-based negative electrode material may be 5% by weight to 95% by weight, preferably, 10% by weight to 70% by weight, more preferably, 10% by weight to 60% by weight, based on the total weight of the negative electrode active material.

In addition, if silicon particles having a crystallite size of 20 nm or less are used as mixed with graphite-based materials generally having low volume expansion, only the silicon particles do not cause large volume expansion. Since there is little separation of the graphite-based material and the silicon particles, a secondary battery excellent in cycling characteristics can be obtained.

**Secondary battery**

According to an embodiment of the present invention, the present invention may provide a negative electrode comprising the negative electrode active material and a secondary battery comprising the same.

The secondary battery may comprise a positive electrode, a negative electrode, a separator interposed between the positive electrode and the negative electrode, and a non-aqueous liquid electrolyte in which a lithium salt is dissolved. The negative electrode may comprise a negative electrode active material comprising a porous silicon-carbon composite.

The negative electrode may be composed of a negative electrode mixture only or may be composed of a negative electrode current collector and a negative electrode mixture layer (negative electrode active material layer) supported thereon. Similarly, the positive electrode may be composed of a positive electrode mixture only or may be composed of a positive electrode current collector and a positive electrode mixture layer (positive electrode active material layer) supported thereon. In addition, the negative electrode mixture and the positive electrode mixture may further comprise a conductive agent and a binder.

Materials known in the field may be used as the material constituting the negative electrode current collector and the material constituting the positive electrode current collector. Materials known in the field may be used as the binder and the conductive material added to the negative electrode and the positive electrode.

If the negative electrode is composed of a current collector and an active material layer supported thereon, the negative electrode may be prepared by coating the negative electrode active material composition comprising the porous silicon-carbon composite on the surface of the current collector and drying it.

In addition, the secondary battery comprises a non-aqueous liquid electrolyte in which the non-aqueous liquid electrolyte may comprise a non-aqueous solvent and a lithium salt dissolved in the non-aqueous solvent. A solvent commonly used in the field may be used as a non-aqueous solvent. Specifically, an aprotic organic solvent may be used. Examples of the aprotic organic solvent include cyclic carbonates such as ethylene carbonate, propylene carbonate, and butylene carbonate, cyclic carboxylic acid esters such as furanone, chain carbonates such as diethyl carbonate, ethylmethyl carbonate, and dimethyl carbonate, chain ethers such as 1,2-methoxyethane, 1,2-ethoxyethane, and ethoxymethoxyethane, and cyclic ethers such as tetrahydrofuran and 2-methyltetrahydrofuran. They may be used alone or in combination of two or more.

The secondary battery may comprise a non-aqueous secondary battery.

The negative electrode active material and the secondary battery using the porous silicon composite or the porous silicon-carbon composite may enhance the capacity, initial charge and discharge efficiency, and capacity retention rate thereof.

**Mode for Carrying out the Invention**

Hereinafter, the present invention will be described in detail with reference to examples. The following examples are only illustrative of the present invention, and the scope of the present invention is not limited thereto.

**Example**

**<Example 1>**

**Preparation of a porous silicon composite and a porous silicon-carbon composite**

(1) Step 1: A silicon composite oxide powder having the element content and physical properties shown in Table 1 below was prepared using a silicon powder, a silicon dioxide powder, and metallic magnesium by the method described in Example 1 of Korean Laid-open Patent Publication No. 2018-0106485.

(2) Step 2: 50 g of the silicon composite oxide powder was dispersed in water, which was stirred at a speed of 300 rpm, and 650 ml of an aqueous solution of 30% by weight of HF was added as an etching solution to etch the silicon composite oxide powder for 1 hour at room temperature.

(3) Step 3: The product obtained by the above etching was filtered and dried at 150°C for 2 hours. Then, in order to control the particle size of the porous composite, it was crushed using a mortar to have an average particle diameter of 5.8 $\mu$m, to thereby prepare a porous silicon composite (B1).

(4) Step 4: 10 g of the porous silicon composite was placed inside a tubular electric furnace, and argon (Ar) and methane gas flowed at a rate of 1 liter/minute, respectively. It was maintained at 900°C for 1 hour and then cooled to room temperature, whereby the surface of the porous silicon composite was coated with carbon, to thereby prepare a porous silicon-carbon composite having the content of each component and physical properties shown in Table 3 below.

(5) Step 5: In order to control the particle size of the porous silicon-carbon composite, it was crushed and classified to have an average particle diameter of 6.1 $\mu$m by a mechanical method, thereby preparing a porous silicon-carbon composite (C1).

**Manufacture of a secondary battery**

A negative electrode and a battery (coin cell) comprising the porous silicon-carbon composite as a negative electrode active material were prepared.

The negative electrode active material, Super-P as a conductive material, and polyacrylic acid were mixed at a weight ratio of 80: 10: 10 with water to prepare a negative electrode active material composition having a solids content of 45%.

The negative electrode active material composition was applied to a copper foil having a thickness of 18 $\mu$m and dried to prepare an electrode having a thickness of 70 $\mu$m. The copper foil coated with the electrode was punched in a circular shape having a diameter of 14 mm to prepare a negative electrode plate for a coin cell.

Meanwhile, a metallic lithium foil having a thickness of 0.3 mm was used as a positive electrode plate.

A porous polyethylene sheet having a thickness of 25 $\mu$m was used as a separator. A liquid electrolyte in which LiPF$_6$ had been dissolved at a concentration of 1 M in a mixed solvent of ethylene carbonate (EC) and diethylene carbonate (DEC) at a volume ratio of 1:1 was used as an electrolyte. The above components were employed to manufacture a coin cell (battery) having a thickness of 3.2 mm and a diameter of 20 mm.

**<Examples 2 to 8>**

A porous silicon-carbon composite was prepared in the same manner as in Example 1 and a secondary battery using the same was manufactured, except that a silicon composite oxide powder having the element content and physical properties shown in Table 1 below was used and that the etching conditions and the type and amount of carbon source gas were changed to adjust the content of each component and the physical properties of the composite as shown in Tables 1 to 3 below.

**<Comparative Example 1>**

A negative electrode active material and a secondary battery using the same were prepared in the same manner as in Example 1, except that the silicon composite oxide of Example 6 was used, that the etching process of step (2) using an etching solution was not carried out, and that the content of each component and the physical properties of the composite were adjusted as shown in Tables 1 to 3 below.

**<Comparative Example 2>**

A negative electrode active material and a secondary battery using the same were prepared in the same manner as in Example 1, except that the silicon composite oxide of Example 6 was used, that nitrohydrochloric acid instead of HF was used as an etching solution and etching was carried out for 12 hours at 70°C, and that the amount of carbon source gas was changed to adjust the content of each component and the physical properties of the composite as shown in Tables 1 to 3 below.

**<Comparative Example 3>**

A porous silicon-carbon composite was prepared and a secondary battery using the same was manufactured in the same manner as in Example 1, except that 410 ml of an aqueous solution of 30% by weight of HF was used as an etching solution to adjust the content of each component and the physical properties of the composite as shown in Tables 1 to 3 below.

**Test Example**

**<Test Example 1> Electron microscope analysis**

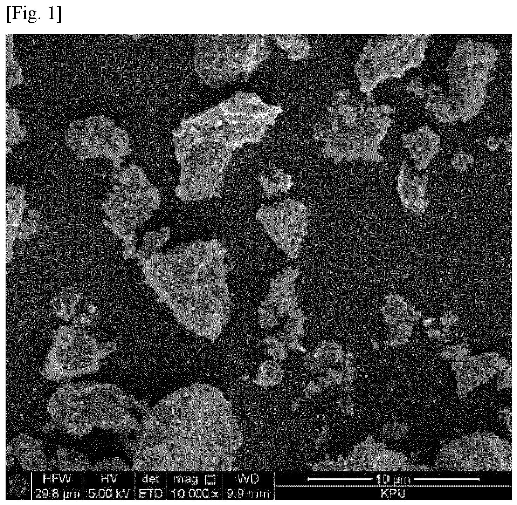

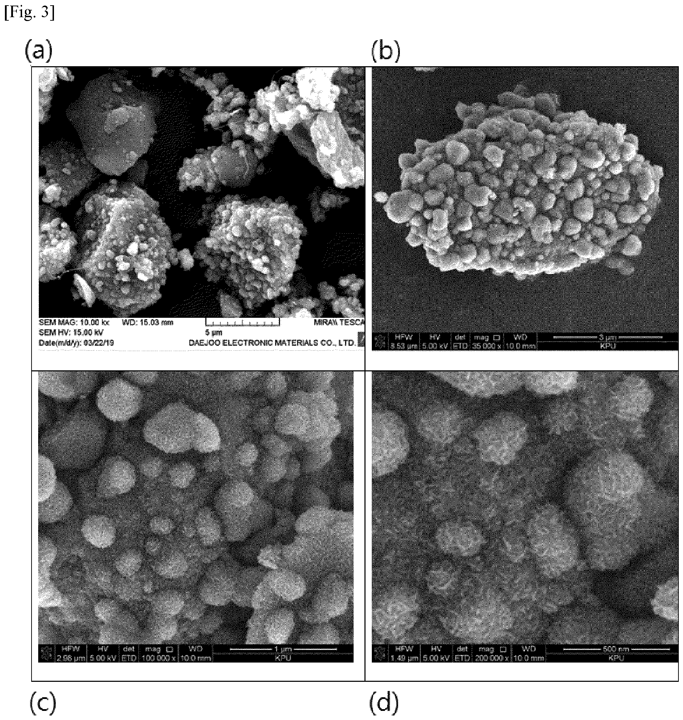

The surfaces of the porous silicon composite and the porous silicon-carbon composite prepared in Example 6 were observed using a scanning electron microscope (FE-SEM) photograph (S-4700, Hitachi), respectively. The results are shown in Figs. 1 and 3, respectively.

Referring to Fig. 1, pores were present on the surface of the porous silicon composite prepared in Example 6.

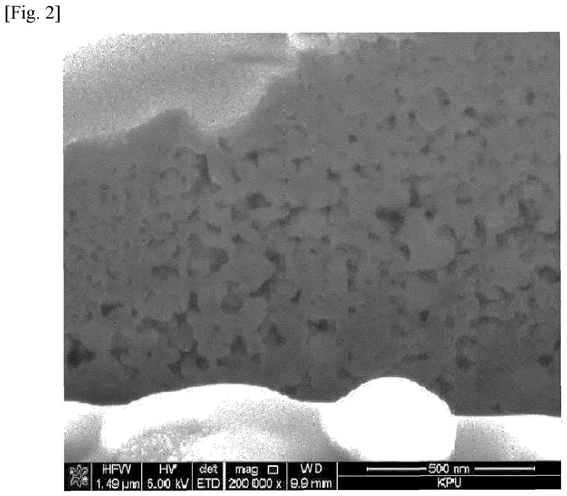

In addition, referring to Fig. 3, field emission scanning electron microscope (FE-SEM) photographs of the surface of the porous silicon-carbon composite comprising a carbon layer on the surface of the porous silicon composite according to the magnification are shown in Figs. 3(a) to 3(d), respectively. As can be seen from Figs. 3(a) to 3(d), when Figs. 1 and 2 are compared, there was a difference in the surfaces of the composites, whereby it was confirmed that a carbon layer was formed on the surface of the secondary silicon particles (silicon aggregates) formed as the silicon particles had been aggregated.

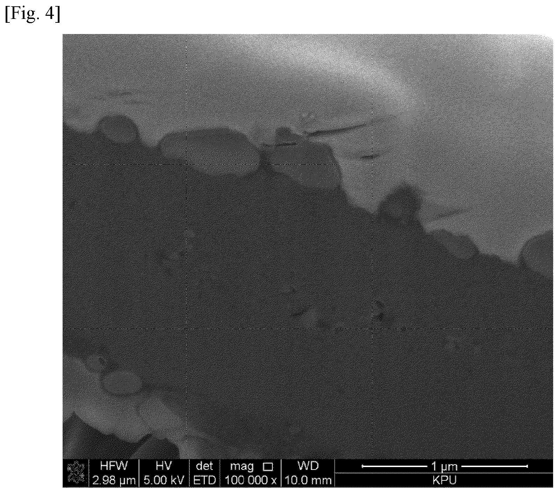

Meanwhile, the insides of the porous silicon composite and the porous silicon-carbon composite prepared in Example 6 were observed using an ion beam scanning electron microscope (FIB-SEM) photograph (S-4700, Hitachi; QUANTA 3D FEG, FEI), respectively. The results are shown in Figs. 2 and 4, respectively.

Referring to Fig. 2, pores were present in the inside of the porous silicon composite prepared in Example 6. It can be inferred from Fig. 2 that pores were formed by the etching solution that penetrated into the porous silicon composite.

In addition, referring to Fig. 4, as a result of observing the inside of the porous silicon-carbon composite comprising a carbon layer on the surface of the porous silicon composite, pores were observed inside the porous silicon composite even after the carbon coating layer was formed on the surface of the porous silicon composite.

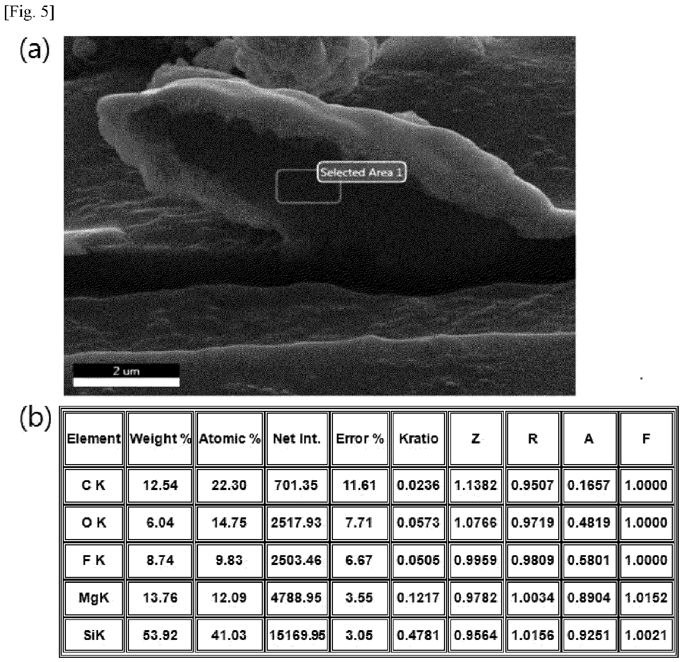

Meanwhile, Fig. 5 is an FIB-SEM EDAX (S-4700, Hitachi; QUANTA 3D FEG, FEI; EDS System, EDAX) photograph (a) of the porous silicon-carbon composite prepared in Example 6 and a table (b) of an analysis of the components in the composite.

Referring to Fig. 5(b), about 15% of carbon content to the inside of the porous silicon-carbon composite was confirmed, suggesting that carbon was coated to the inner pores.

In addition, as shown in the table of Fig. 5(b) of the component analysis, Mg, F, C, O, and Si components were observed in the porous silicon-carbon composite of Example 6.

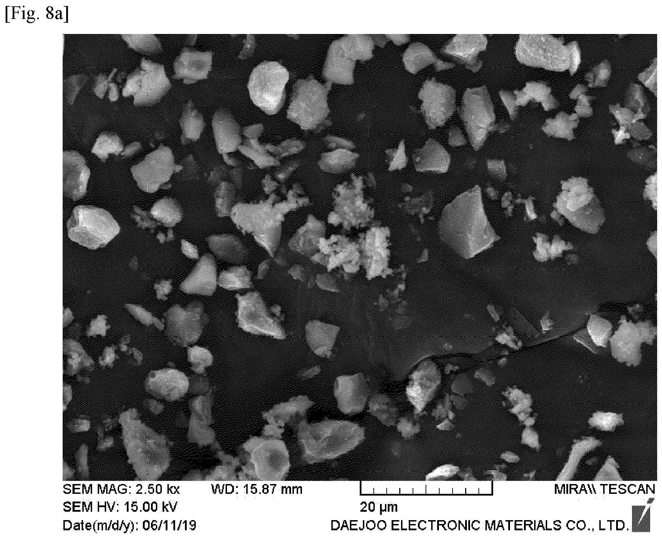

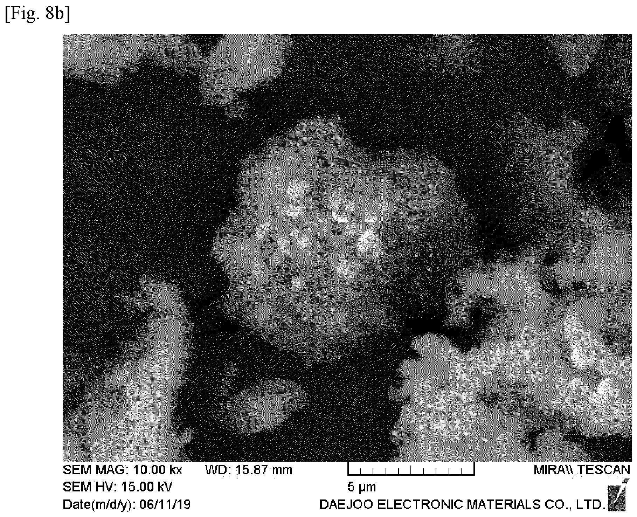

Figs. 8a and 8b show photographs of the porous silicon composite (B1) prepared in Example 1 in different magnifications as analyzed by scanning electron microscopy (SEM).

As can be seen from Figs. 8a and 8b, silicon aggregates in which silicon particles having a crystallite size according to an embodiment of the present invention were interconnected with each other were present, and voids were formed therebetween.

**<Test Example 2> X-ray diffraction analysis**

The crystal structures of the silicon composite oxide (A), the porous silicon composite (B), and the porous silicon-carbon composite (C) prepared in the Examples were analyzed with an X-ray diffraction analyzer (Malvern Panalytical, X'Pert3).

Specifically, the applied voltage was 40 kV and the applied current was 40 mA. The range of $2\theta$ was 10° to 90°, and it was measured by scanning at an interval of 0.05°.

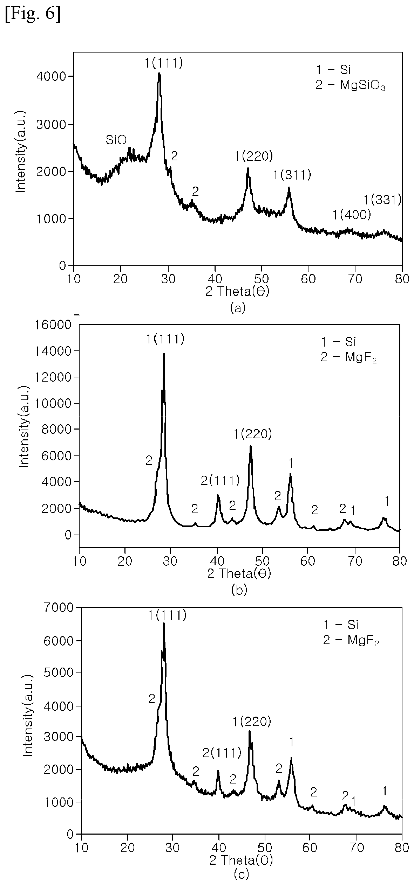

Fig. 6 shows the measurement results of an X-ray diffraction analysis of the silicon composite oxide (a), the porous silicon composite (b), and the porous silicon-carbon composite (c) of Example 6.

Referring to Fig. 6(a), as can be seen from the X-ray diffraction pattern, the silicon composite oxide of Example 6 had a peak corresponding to $SiO_2$ around a diffraction angle ($2\theta$) of 21.7°; peaks corresponding to Si crystals around diffraction angles ($2\theta$) of 28.1°, 47.0°, 55.8°, 68.6°, and 76.1°; and peaks corresponding to $MgSiO_3$ around diffraction angles ($2\theta$) of 30.4° and 35.0°, which confirms that the silicon composite oxide comprised amorphous $SiO_2$, crystalline Si, and $MgSiO_3$.

Referring to Fig. 6(b), as can be seen from the X-ray diffraction pattern, the porous silicon composite of Example 6 had peaks corresponding to $MgF_2$ crystals around diffraction angles ($2\theta$) of 27.1°, 35.2°, 40.4°, 43.5°, 53.3°, 60.9°, and 67.9°; and peaks corresponding to Si crystals around diffraction angles ($2\theta$) of 28.1°, 47.0°, 55.8°, 68.6°, and 76.1°. In addition, as the peak corresponding to $MgSiO_3$ disappeared and the peak corresponding to $MgF_2$ appeared, it can be seen that $MgSiO_3$ was converted to $MgF_2$ upon etching.

Referring to Fig. 6(c), as can be seen from the X-ray diffraction pattern, the porous silicon-carbon composite of Example 6 had peaks corresponding to $MgF_2$ crystals around diffraction angles ($2\theta$) of 27.1°, 35.2°, 40.4°, 43.5°, 53.3°, 60.9°, 67.9°, and 76.4°; and peaks corresponding to Si crystals around diffraction angles ($2\theta$) of 28.1°, 47.0°, 55.8°, 68.6°, and 76.1°. There was no significant change other than the change in intensity before and after the carbon coating. The diffraction angle ($2\theta$) of carbon could not be confirmed since it overlapped with the Si (111) peak.

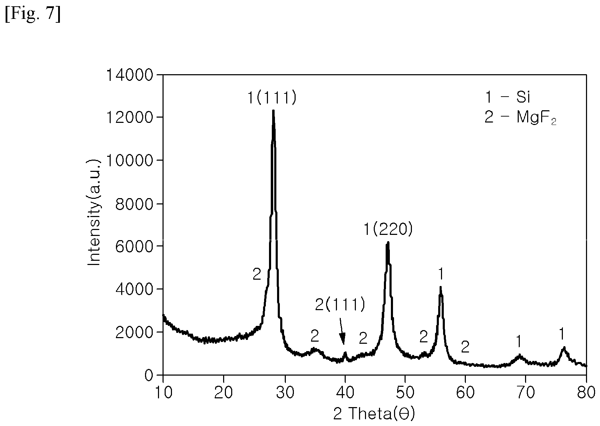

Fig. 7 shows the measurement results of an X-ray diffraction analysis of the porous silicon-carbon composite of Example 3.

Referring to Fig. 7, as can be seen from the X-ray diffraction pattern, the porous silicon-carbon composite of Example 3 had peaks corresponding to $MgF_2$ crystals around diffraction angles ($2\theta$) of 28.0°, 34.9°, 40.1°, 43.4°, 53.0°, and 60.2°; and peaks corresponding to Si crystals around diffraction angles ($2\theta$) of 28.1°, 47.1°, 55.8°, 68.9°, and 76.4°. In addition, the diffraction angle ($2\theta$) of carbon could not be confirmed since it overlapped with the Si (111) peak.

Meanwhile, the crystal size of Si in the obtained porous silicon-carbon composite was determined by the Scherrer equation of the following Equation 1 based on a full width at half maximum (FWHM) of the peak corresponding to Si (220) in the X-ray diffraction analysis.

[Equation 1]

$$\text{Crystal size (nm)} = K\lambda/B\cos\theta$$

In Equation 1, K is 0.9, $\lambda$ is 0.154 nm, B is a full width at half maximum (FWHM), and $\theta$ is a peak position (angle).

**<Test Example 3> Analysis of the content and specific gravity of the component elements of the composites**

The content of each component element of magnesium (Mg), oxygen (O), and carbon (C) in the composites prepared in the Examples and Comparative Examples were analyzed.

The content of magnesium (Mg) was analyzed by inductively coupled plasma (ICP) emission spectroscopy. The contents of oxygen (O) and carbon (C) were measured by an elemental analyzer, respectively. The content of silicon (Si) was a value calculated based on the contents of oxygen (O) and magnesium (Mg).

**<Test Example 4> Measurement of an average particle diameter of composite particles**

The average particle diameter ($D_{50}$) of the composite particles prepared in the Examples and Comparative Examples was measured as a diameter average value $D_{50}$, i.e., a particle size or median diameter when the cumulative volume is 50% in particle size distribution measurement according to a laser beam diffraction method.

**<Test Example 5> Raman analysis**

The porous silicon-carbon composite prepared in Example 1 was subjected to a Raman spectroscopic analysis. Raman analysis was carried out using a micro Raman analyzer (Renishaw, RM1000-In Via) at 2.41 eV (514 nm).

As a result, the Raman spectrum obtained by Raman spectroscopy had a 2D band peak in the range of 2,600 $cm^{-1}$ to 2,760 $cm^{-1}$, a G band peak in the range of 1,500 $cm^{-1}$ to 1,660 $cm^{-1}$, and a D band peak in the range of 1,300 $cm^{-1}$ to 1,460 $cm^{-1}$. When the intensity of the 2D band peak is $I_{2D}$, the intensity of the D band peak is $I_D$, and the intensity of the G band peak is $I_G$, $I_D$, $I_{2D}$, and $I_G$ were 1.0, 0.1, and 0.82, respectively, and $(I_{2D} + I_G)/I_D$ was 0.92.

It can be seen from the results of Raman spectroscopic analysis that the carbon layer had $I_D$, $I_{2D}$, and $I_G$ of the above values, so that the conductivity was good and the characteristics of the secondary battery could be enhanced. In particular, as $(I_{2D} + I_G)/I_D$ was 0.92, it was possible to suppress side reactions during charge and discharge and to suppress a deterioration in the initial efficiency.

Accordingly, the porous silicon-carbon composite prepared in Example 1 was excellent in conductivity, and the performance of the lithium secondary battery could be remarkably enhanced.

### <Test Example 6> Measurement of capacity, initial efficiency, and capacity retention rate of secondary batteries

The coin cells (secondary batteries) prepared in the Examples and Comparative Examples were each charged at a constant current of 0.1 C until the voltage reached 0.005 V and discharged at a constant current of 0.1 C until the voltage reached 2.0 V to measure the charge capacity (mAh /g), discharge capacity (mAh/g), and initial efficiency (%). The results are shown in Table 4 below.

[Equation 2]

$$\text{Initial efficiency (\%)} = \text{discharge capacity/charge capacity} \times 100$$

In addition, the coin cells prepared in the Examples and Comparative Examples were each charged and discharged once in the same manner as above and, from the second cycle, charged at a constant current of 0.5 C until the voltage reached 0.005 V and discharged at a constant current of 0.5 C until the voltage reached 2.0 V to measure the cycle characteristics (capacity retention rate for 50 cycles, %). The results are shown in Table 4 below.

[Equation 3]

$$\text{Capacity retention rate for 50 cycles (\%)} = 51^{st} \text{ discharge capacity/} 2^{nd} \text{ discharge capacity} \times 100$$

The content of each element and physical properties of the composites prepared in the Examples and Comparative Examples are summarized in Tables 1 to 3 below. The characteristics of the secondary batteries using the same are summarized in Table 4 below.

[Table 1]

| | | | Example | | | | | | | | Comparative Example | | |
|---|---|---|---|---|---|---|---|---|---|---|---|---|---|
| | | | 1 | 2 | 3 | 4 | 5 | 6 | 7 | 8 | 1 | 2 | 3 |
| Silicon composite oxide (A) | Name | | A1 | | | A2 | | A3 | A4 | A5 | A3 | | |
| | Mg content (% by weight) | | 2 | | | 0.8 | | 5.3 | 1.45 | 8 | 5.3 | | |
| | O content (% by weight) | | 34.2 | | | 34.8 | | 33.1 | 35.7 | 31.7 | 33.1 | | |
| | $D_{50}$ ($\mu$m) | | 5.04 | | | 5.0 | | 5.9 | 6.25 | 5.52 | 5.9 | | |
| | Particle density (g/cm$^3$) | | 2.39 | | | 2.36 | | 2.46 | 2.39 | 2.52 | 2.46 | | |
| | BET (m$^2$/g) | | 4.84 | | | 6.6 | | 10.8 | 6.9 | 5.4 | 10.8 | | |

[Table 2]

| | | Example | | | | | | | | Comparative Example | | |
|---|---|---|---|---|---|---|---|---|---|---|---|---|
| | | 1 | 2 | 3 | 4 | 5 | 6 | 7 | 8 | 1 | | 3 |
| Porous silicon composite (B) | Name | B1 | B2 | B3 | | | B4 | B5 | B6 | | B10 | B11 |
| | Oxygen reduction rate (%) | 89 | 96 | 94 | | | 85 | 98 | 90 | | - | 57 |
| | Mg content (% by weight) | 1.42 | 2.5 | 3.4 | | | 5.73 | 2.22 | 9.5 | | 7 | 7.6 |
| | O content (% by weight) | 3.78 | 1.47 | 2.6 | | | 4.91 | 1.88 | 3.4 | | 35 | 14 |
| | Si content (% by weight) | 92.8 | 92.2 | 88.7 | | | 81.7 | 92.4 | 72.2 | | 58 | 66.4 |
| | O/Si molar ratio | 0.07 | 0.03 | 0.05 | | | 0.11 | 0.036 | 0.08 | | 1.06 | 0.37 |
| | Si (220) (nm) | 6.7 | 6.6 | 7.4 | | | 8.57 | 6.9 | 7.3 | | 7.6 | 7.5 |
| | $MgF_2$ (111)/ Si (220) | 0.1 | 0.09 | 0.46 | | | 0.25 | 0.245 | 0.37 | | - | 0.21 |
| | Particle density (g/cm$^3$) | 1.88 | 1.98 | 1.76 | | | 2.02 | 1.78 | 1.91 | | 2.47 | 2.08 |
| | BET (m$^2$/g) | 632 | 521.5 | 719 | | | 492 | 670 | 231.4 | | 18 | 218 |
| | $D_{50}$ ($\mu$m) | 5.0 | 5.0 | 4.9 | | | 5.8 | 6.1 | 5.2 | | 5.8 | 5.7 |
| | Micropore (cm$^3$/g) | 0.2612 | 0.2227 | 0.3079 | | | 0.1979 | 0.2973 | 0.0957 | | - | 0.0619 |
| | Mesopore (cm$^3$/g) | 0.3758 | 0.367 | 0.3318 | | | 0.343 | 0.3227 | 0.3383 | | - | 0.1416 |
| | Macropore (cm$^3$/g) | 0.0743 | 0.0335 | 0.0325 | | | 0.0617 | 0.0165 | 0.1018 | | - | 0.0221 |

EP 4 269 342 A1

[Table 3]

| | | Example | | | | | | | | Comparative Example | | |
|---|---|---|---|---|---|---|---|---|---|---|---|---|
| | | 1 | 2 | 3 | 4 | 5 | 6 | 7 | 8 | 1 | 2 | 3 |
| Porous silicon-carbon composite (C) | Name | C1 | C2 | C3 | C4 | C5 | C6 | C7 | C8 | C14 | C15 | C16 |
| | Si content (% by weight) | 63.23 | 64.5 | 65.64 | 54.55 | 22.18 | 53.07 | 64.42 | 42.86 | 58.03 | 55.1 | 41.7 |
| | Mg content (% by weight) | 0.98 | 1.8 | 2.52 | 2.09 | 0.85 | 3.73 | 1.55 | 5.7 | 4.99 | 6.65 | 6.8 |
| | O content (% by weight) | 3.1 | 1.9 | 1.92 | 1.6 | 0.65 | 3.35 | 1.31 | 2.5 | 31.18 | 33.25 | 8.82 |
| | O/Si molar ratio | 0.08 | 0.05 | 0.05 | 0.05 | 0.05 | 0.11 | 0.04 | 0.10 | 0.94 | 1.06 | 0.37 |
| | Si (220) (nm) | 10.9 | 7.8 | 9.63 | 8.1 | 11.8 | 9.62 | 14 | 10.3 | 7.1 | 8.8 | 9.2 |
| | $MgF_2$ (111)/ Si (220) | 0.123 | 0.072 | 0.071 | 0.233 | 0.04 | 0.366 | 0.070 | 0.615 | - | - | 0.314 |
| | Particle density (g/cm$^3$) | 1.98 | 2.31 | 2.03 | 2.35 | 2.18 | 1.96 | 2.01 | 2.23 | 2.27 | 2.4 | 2.31 |
| | $D_{50}$ (μm) | 6.1 | 6.7 | 7.8 | 6.6 | 7.7 | 8.4 | 7.9 | 9.7 | 7.03 | 8.3 | 7.6 |
| | BET (m$^2$/g) | 13 | 9.7 | 6.8 | 11.4 | 4.7 | 13.6 | 8.8 | 13.2 | 2.9 | 5.6 | 8.7 |

[Table 4]

| | | Example | | | | | | | | Comparative Example | | |
|---|---|---|---|---|---|---|---|---|---|---|---|---|
| | | 1 | 2 | 3 | 4 | 5 | 6 | 7 | 8 | 1 | 2 | 3 |
| Characteristics of secondary battery | Discharge capacity (mAh/g) | 1922 | 1996 | 2074 | 1683 | 2070 | 1702 | 2300 | 1445 | 1453 | 1410 | 1505 |
| | Initial efficiency (%) | 91.4 | 86.1 | 90.8 | 86.2 | 90.8 | 90 | 94.1 | 88.1 | 79.6 | 77.5 | 84.2 |
| | Capacity retention rate after 50 cycles (%) | 89.5 | 89.5 | 89.1 | 87.8 | 88 | 84.1 | 88.2 | 86.2 | 84.5 | 70.1 | 86.3 |

As can be seen from Table 4, the porous silicon composites and porous silicon-carbon composites of Examples 1 to 8 of the present invention comprised silicon particles and a magnesium compound in which the molar ratio of oxygen (O) atoms to silicon (Si) atoms (O/Si) satisfied a specific range. As a result, the secondary batteries prepared using the same were significantly enhanced in performance in terms of discharge capacity, initial efficiency, and capacity retention rate as compared with the secondary batteries of Comparative Examples 1 to 3.

Specifically, the secondary batteries of Examples 1 to 8 using the porous silicon composite having a molar ratio (O/Si) of oxygen (O) atoms to silicon (Si) atoms of 0.03 to 0.11 had a discharge capacity of 1,445 mAh/g to 2,074 mAh/g, an initial efficiency of 86.1% to 94.1%, and a capacity retention rate of 84.1% to 89.5%, indicating that the performance of the secondary batteries was overall excellent.

Meanwhile, when the secondary battery of Example 6, the secondary battery of Comparative Example 1 in which the etching was not carried out in the process of Example 6, and the secondary battery of Comparative Example 2 in which the etching was carried out using nitrohydrochloric acid instead of HF in the process of Example 6 are compared, the secondary battery of Example 6 had a discharge capacity of 1,702 mAh/g and an initial efficiency of 90%, whereas the secondary batteries of Comparative Examples 1 and 2 had a discharge capacity of 1,453 mAh/g and 1,410 mAh/g and an initial efficiency of 79.6% and 77.5%, respectively, indicating that the secondary batteries of Comparative Examples 1 and 2 were significantly reduced in the discharge capacity and initial efficiency as compared with the secondary battery of Example 6.

In addition, when the secondary battery of Example 1 and the secondary battery of Comparative Example 3 in which the molar ratio (O/Si) of oxygen (O) atoms to silicon (Si) atoms was 0.37 are compared, the secondary battery of Comparative Example 3 had a discharge capacity of 1,505 mAh/g and an initial efficiency of 84.2%, indicating that its performance was significantly reduced as compared with the secondary battery of Example 1 having a discharge capacity of 1,922 mAh/g and an initial efficiency of 91.4%.

Accordingly, it is confirmed that the performance of a secondary battery can be enhanced by adjusting the molar ratio (O/Si) of oxygen (O) atoms to silicon (Si) atoms in the composite.

## Claims

1. A porous silicon composite, which comprises silicon particles and a magnesium compound, wherein the molar ratio (O/Si) of oxygen (O) atoms to silicon (Si) atoms in the porous silicon composite is 0.01 to 0.35.

2. The porous silicon composite of claim 1, wherein the porous silicon composite comprises a silicon aggregate in which the silicon particles are interconnected with each other.

3. The porous silicon composite of claim 1, wherein the magnesium compound comprises a fluorine-containing magnesium compound, and the fluorine-containing magnesium compound comprises magnesium fluoride ($MgF_2$), magnesium fluoride silicate ($MgSiF_6$), or a mixture thereof.

4. The porous silicon composite of claim 3, wherein the magnesium compound comprises $MgSiO_3$, $Mg_2SiO_4$, or a mixture thereof.

5. The porous silicon composite of claim 4, wherein the content of magnesium (Mg) in the porous silicon composite is 0.2% by weight to 20% by weight based on the total weight of the porous silicon composite.

6. The porous silicon composite of claim 1, wherein the silicon particles have a crystallite size of 1 nm to 20 nm in an X-ray diffraction analysis.

7. The porous silicon composite of claim 1, which further comprises a silicon oxide ($SiO_x$, $0.1 < x \leq 2$) formed on the surface of the silicon particles.

8. The porous silicon composite of claim 7, wherein the content of oxygen (O) in the porous silicon composite is 0.1% by weight to 15% by weight based on the total weight of the porous silicon composite.

9. The porous silicon composite of claim 1, wherein the porous silicon composite has an average particle diameter ($D_{50}$) of 1 $\mu$m to 15 $\mu$m and a specific gravity of 1.5 g/cm$^3$ to 2.3 g/cm$^3$.

10. The porous silicon composite of claim 1, wherein the porous silicon composite comprises pores inside thereof, when the surface of the porous silicon composite is measured by a gas adsorption method (BET plot method), it comprises micropores of 2 nm or less in a pore volume of 0.01 cm$^3$/g to 0.5 cm$^3$/g and mesopores of greater than 2 nm to 50 nm in a pore volume of 0.2 cm$^3$/g to 0.7 cm$^3$/g, and the porous silicon composite has a specific surface area (Brunauer-Emmett-Teller method; BET) of 100 m$^2$/g to 1,600 m$^2$/g.

11. A porous silicon-carbon composite, which comprises the porous silicon composite of claim 1 and carbon.

12. The porous silicon-carbon composite of claim 11, wherein the molar ratio (O/Si) of oxygen (O) atoms to silicon (Si) atoms in the porous silicon-carbon composite is 0.01 to 0.35.

13. The porous silicon-carbon composite of claim 11, wherein the porous silicon-carbon composite comprises pores inside thereof, and the porosity of the porous silicon-carbon composite is 0.5% by volume to 40% by volume based on the volume of the porous silicon-carbon composite.

14. The porous silicon-carbon composite of claim 11, wherein the content of silicon (Si) is 30% by weight to 90% by weight based on the total weight of the porous silicon-carbon composite.

15. The porous silicon-carbon composite of claim 11, wherein the carbon is present on the surface of at least one selected from the group consisting of the silicon particles and the magnesium compound, the carbon serves as a matrix, the silicon particles, the magnesium compound and pores being dispersed in the carbon matrix, or the carbon is present in both ways.

16. The porous silicon-carbon composite of claim 15, wherein a carbon layer is further formed on the surface of the porous silicon composite, the carbon layer comprises at least one selected from the group consisting of graphene, reduced graphene oxide, a carbon nanotube, a carbon nanofiber, and graphite, and the carbon layer has a thickness of 1 nm to 300 nm.

17. The porous silicon-carbon composite of claim 11, wherein the content of carbon (C) is 10% by weight to 90% by weight based on the total weight of the porous silicon-carbon composite.

18. The porous silicon-carbon composite of claim 11, wherein the porous silicon-carbon composite has an average particle diameter (D$_{50}$) of 2 $\mu$m to 15 $\mu$m, and the porous silicon-carbon composite has a specific gravity of 1.8 g/cm$^3$ to 2.5 g/cm$^3$ and a specific surface area (Brunauer-Emmett-Teller method; BET) of 3 m$^2$/g to 50 m$^2$/g.

19. A process for preparing the porous silicon composite of claim 1, which comprises:

   a first step of obtaining a silicon composite oxide powder using a silicon-based raw material and a magnesium-based raw material;
   a second step of etching the silicon composite oxide powder using an etching solution comprising a fluorine (F) atom-containing compound; and
   a third step of filtering and drying the composite obtained by the etching to obtain the porous silicon composite.

20. A process for preparing the porous silicon-carbon composite of claim 11, which comprises:

   a first step of obtaining a silicon composite oxide powder using a silicon-based raw material and a magnesium-based raw material;
   a second step of etching the silicon composite oxide powder using an etching solution comprising a fluorine (F) atom-containing compound;
   a third step of filtering and drying the composite obtained by the etching to obtain a porous silicon composite; and
   a fourth step of forming a carbon layer on the surface of the porous silicon composite by using a chemical thermal decomposition deposition method to prepare the porous silicon-carbon composite.

21. The process for preparing the silicon-carbon composite according to claim 20, wherein, in the second step, the etching solution further comprises one or more acids selected from the group consisting of organic acids, sulfuric acid, hydrochloric acid, phosphoric acid, nitric acid, and chromic acid.

22. The process for preparing the silicon-carbon composite according to claim 20, which further comprises, after the fourth step, pulverizing or crushing and classifying the porous silicon-carbon composite such that the porous silicon-carbon composite has an average particle diameter of 2 $\mu$m to 15 $\mu$m.

23. The process for preparing the silicon-carbon composite according to claim 20, wherein the formation of the carbon layer in the fourth step is carried out by injecting at least one selected from a compound represented by the following Formulae 1 to 3 and carrying out a reaction in a gaseous state at 400°C to 1,200°C:

[Formula 1]    $C_N H_{(2N + 2-A)}[OH]_A$

in Formula 1, N is an integer of 1 to 20, and A is 0 or 1,

[Formula 2]    $C_N H_{(2N-B)}$

in Formula 2, N is an integer of 2 to 6, and B is an integer of 0 to 2,

[Formula 3]    $C_x H_y O_z$

in Formula 3, x is an integer of 1 to 20, y is an integer of 0 to 25, and z is an integer of 0 to 5.

24. A negative electrode active material for a lithium secondary battery, which comprises the porous silicon-carbon composite of claim 11.

25. The negative electrode active material for a lithium secondary battery of claim 24, which further comprises a carbon-based negative electrode material.

26. The negative electrode active material for a lithium secondary battery of claim 25, wherein the content of the carbon-based negative electrode material is 5% by weight to 95% by weight based on the total weight of the negative electrode active material.

27. A lithium secondary battery, which comprises the negative electrode active material for a lithium secondary battery of claim 24.

[Fig. 1]

[Fig. 2]

[Fig. 3]

(a)

(b)

(c)

(d)

[Fig. 4]

[Fig. 5]

(a)

(b)

| Element | Weight % | Atomic % | Net Int. | Error % | Kratio | Z | R | A | F |
|---------|----------|----------|----------|---------|--------|------|------|------|------|
| C K | 12.54 | 22.30 | 701.35 | 11.61 | 0.0236 | 1.1382 | 0.9507 | 0.1657 | 1.0000 |
| O K | 6.04 | 14.75 | 2517.93 | 7.71 | 0.0573 | 1.0766 | 0.9719 | 0.4819 | 1.0000 |
| F K | 8.74 | 9.83 | 2503.46 | 6.67 | 0.0505 | 0.9959 | 0.9809 | 0.5801 | 1.0000 |
| MgK | 13.76 | 12.09 | 4788.95 | 3.55 | 0.1217 | 0.9782 | 1.0034 | 0.8904 | 1.0152 |
| SiK | 53.92 | 41.03 | 15169.95 | 3.05 | 0.4781 | 0.9564 | 1.0156 | 0.9251 | 1.0021 |

[Fig. 6]

(a)

(b)

(c)

[Fig. 7]

[Fig. 8a]

SEM MAG: 2.50 kx    WD: 15.87 mm                    MIRA\\ TESCAN
SEM HV: 15.00 kV                          20 μm
Date(m/d/y): 06/11/19          DAEJOO ELECTRONIC MATERIALS CO., LTD.

[Fig. 8b]

SEM MAG: 10.00 kx    WD: 15.87 mm                                    MIRA\\ TESCAN
SEM HV: 15.00 kV                          5 µm
Date(m/d/y): 06/11/19              DAEJOO ELECTRONIC MATERIALS CO., LTD.

[Fig. 9]

## INTERNATIONAL SEARCH REPORT

| International application No. |
| --- |
| **PCT/KR2021/018269** |

### A. CLASSIFICATION OF SUBJECT MATTER

**C01B 33/20**(2006.01)i; **C01B 33/22**(2006.01)i; **C01B 33/10**(2006.01)i; **C01F 5/28**(2006.01)i; **H01M 4/36**(2006.01)i; **H01M 4/38**(2006.01)i; **H01M 4/48**(2010.01)i; **H01M 4/62**(2006.01)i; **H01M 4/587**(2010.01)i

According to International Patent Classification (IPC) or to both national classification and IPC

### B. FIELDS SEARCHED

Minimum documentation searched (classification system followed by classification symbols)

C01B 33/20(2006.01); C01B 33/02(2006.01); H01M 10/052(2010.01); H01M 10/0525(2010.01); H01M 4/13(2010.01); H01M 4/134(2010.01); H01M 4/38(2006.01); H01M 4/48(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 다공성 규소 구조체(porous silicon structure), 마그네슘 화합물(magnesium compound), 탄소층(carbon layer), 몰비(mole ratio), 에칭(etching)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-1981609 B1 (LG CHEM, LTD.) 24 May 2019 (2019-05-24)<br>See claims 1, 9, 20 and 21; paragraphs [0043], [0047], [0048], [0050], [0052], [0055]-[0057], [0062]-[0064], [0066], [0067], [0071], [0076], [0077], [0089], [0093], [0096] and [0128]; and example 1. | 1-27 |
| Y | KR 10-2017-0090449 A (CORNING INCORPORATED) 07 August 2017 (2017-08-07)<br>See claims 1, 2, 8, 10, 12 and 24; and paragraphs [0021], [0062], [0077] and [0078]. | 1-27 |
| Y | KR 10-2016-0081688 A (SAMSUNG ELECTRONICS CO., LTD. et al.) 08 July 2016 (2016-07-08)<br>See claims 1 and 9; paragraph [0098]; and example 2. | 3-5 |
| Y | KR 10-2014-0056069 A (LG CHEM, LTD.) 09 May 2014 (2014-05-09)<br>See paragraph [0091]. | 23 |
| A | WO 2012-036265 A1 (FURUKAWA ELECTRIC CO., LTD.) 22 March 2012 (2012-03-22)<br>See claims 1, 4, 6 and 9. | 1-27 |

☐ Further documents are listed in the continuation of Box C.     ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **08 March 2022** | **10 March 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT
Information on patent family members

| International application No. |
|---|
| **PCT/KR2021/018269** |

| Patent document cited in search report | | | Publication date (day/month/year) | Patent family member(s) | | | Publication date (day/month/year) |
|---|---|---|---|---|---|---|---|
| KR | 10-1981609 | B1 | 24 May 2019 | CN | 107636867 | A | 26 January 2018 |
| | | | | CN | 107636867 | B | 02 April 2021 |
| | | | | EP | 3355389 | A1 | 01 August 2018 |
| | | | | EP | 3355389 | B1 | 30 December 2020 |
| | | | | JP | 2018-523898 | A | 23 August 2018 |
| | | | | JP | 6727667 | B2 | 22 July 2020 |
| | | | | KR | 10-2017-0036381 | A | 03 April 2017 |
| | | | | PL | 3355389 | T3 | 17 May 2021 |
| | | | | US | 2018-0151874 | A1 | 31 May 2018 |
| | | | | WO | 2017-052281 | A1 | 30 March 2017 |
| KR | 10-2017-0090449 | A | 07 August 2017 | AU | 2011-293715 | A1 | 31 January 2013 |
| | | | | CN | 103069055 | A | 24 April 2013 |
| | | | | CN | 103069055 | B | 03 August 2016 |
| | | | | CN | 104271505 | A | 07 January 2015 |
| | | | | CN | 106103344 | A | 09 November 2016 |
| | | | | CN | 106463702 | A | 22 February 2017 |
| | | | | CN | 106463702 | B | 21 February 2020 |
| | | | | CN | 107004830 | A | 01 August 2017 |
| | | | | CN | 107004830 | B | 28 April 2020 |
| | | | | CN | 108290740 | A | 17 July 2018 |
| | | | | EP | 2609234 | A2 | 03 July 2013 |
| | | | | EP | 2609234 | A4 | 04 November 2015 |
| | | | | EP | 2791058 | A1 | 22 October 2014 |
| | | | | EP | 2819949 | A1 | 07 January 2015 |
| | | | | EP | 3130023 | A1 | 15 February 2017 |
| | | | | EP | 3224881 | A1 | 04 October 2017 |
| | | | | EP | 3380436 | A1 | 03 October 2018 |
| | | | | JP | 2013-536151 | A | 19 September 2013 |
| | | | | JP | 2015-500787 | A | 08 January 2015 |
| | | | | JP | 2015-514660 | A | 21 May 2015 |
| | | | | JP | 2017-514273 | A | 01 June 2017 |
| | | | | JP | 2017-536676 | A | 07 December 2017 |
| | | | | JP | 5878535 | B2 | 08 March 2016 |
| | | | | JP | 6251685 | B2 | 20 December 2017 |
| | | | | KR | 10-2013-0108531 | A | 04 October 2013 |
| | | | | KR | 10-2014-0131566 | A | 13 November 2014 |
| | | | | KR | 10-2016-0142863 | A | 13 December 2016 |
| | | | | KR | 10-2018-0087340 | A | 01 August 2018 |
| | | | | TW | 201217290 | A | 01 May 2012 |
| | | | | TW | 201633586 | A | 16 September 2016 |
| | | | | TW | I560163 | B | 01 December 2016 |
| | | | | US | 10439206 | B2 | 08 October 2019 |
| | | | | US | 10629900 | B2 | 21 April 2020 |
| | | | | US | 2012-0052656 | A1 | 01 March 2012 |
| | | | | US | 2013-0149549 | A1 | 13 June 2013 |
| | | | | US | 2013-0209781 | A1 | 15 August 2013 |
| | | | | US | 2013-0220211 | A1 | 29 August 2013 |
| | | | | US | 2015-0291470 | A1 | 15 October 2015 |
| | | | | US | 2017-0033353 | A1 | 02 February 2017 |
| | | | | US | 2017-0149059 | A1 | 25 May 2017 |

Form PCT/ISA/210 (patent family annex) (July 2019)

International application No.

**PCT/KR2021/018269**

| Patent document cited in search report | | | Publication date (day/month/year) | Patent family member(s) | | | Publication date (day/month/year) |
|---|---|---|---|---|---|---|---|
| | | | | US | 2017-0271651 | A1 | 21 September 2017 |
| | | | | US | 2020-0220170 | A1 | 09 July 2020 |
| | | | | US | 8415555 | B2 | 09 April 2013 |
| | | | | US | 9917299 | B2 | 13 March 2018 |
| | | | | WO | 2012-027121 | A2 | 01 March 2012 |
| | | | | WO | 2012-027121 | A3 | 09 August 2012 |
| | | | | WO | 2013-090153 | A1 | 20 June 2013 |
| | | | | WO | 2013-130696 | A1 | 06 September 2013 |
| | | | | WO | 2015-157538 | A1 | 15 October 2015 |
| | | | | WO | 2016-085953 | A1 | 02 June 2016 |
| | | | | WO | 2017-091543 | A1 | 01 June 2017 |
| KR | 10-2016-0081688 | A | 08 July 2016 | CN | 105742583 | A | 06 July 2016 |
| | | | | CN | 105742583 | B | 09 August 2019 |
| | | | | US | 10164240 | B2 | 25 December 2018 |
| | | | | US | 2016-0190597 | A1 | 30 June 2016 |
| KR | 10-2014-0056069 | A | 09 May 2014 | CN | 103931027 | A | 16 July 2014 |
| | | | | CN | 103931027 | B | 07 December 2016 |
| | | | | EP | 2897200 | A1 | 22 July 2015 |
| | | | | EP | 2897200 | B1 | 25 July 2018 |
| | | | | JP | 05-927710 | B2 | 01 June 2016 |
| | | | | JP | 2015-520725 | A | 23 July 2015 |
| | | | | US | 2014-0141334 | A1 | 22 May 2014 |
| | | | | US | 9548493 | B2 | 17 January 2017 |
| | | | | WO | 2014-069902 | A1 | 08 May 2014 |
| WO | 2012-036265 | A1 | 22 March 2012 | CN | 103118976 | A | 22 May 2013 |
| | | | | CN | 103118976 | B | 06 July 2016 |
| | | | | JP | 2012-082125 | A | 26 April 2012 |
| | | | | JP | 2012-082126 | A | 26 April 2012 |
| | | | | JP | 5598861 | B2 | 01 October 2014 |
| | | | | JP | 5877025 | B2 | 02 March 2016 |
| | | | | KR | 10-1920942 | B1 | 21 November 2018 |
| | | | | KR | 10-2013-0105626 | A | 25 September 2013 |
| | | | | TW | 201217267 | A | 01 May 2012 |
| | | | | TW | I503277 | B | 11 October 2015 |
| | | | | US | 2013-0196158 | A1 | 01 August 2013 |
| | | | | US | 8980428 | B2 | 17 March 2015 |

Form PCT/ISA/210 (patent family annex) (July 2019)

**REFERENCES CITED IN THE DESCRIPTION**

**Patent documents cited in the description**

- JP 4393610 B
- JP 2016502253 A

- KR 20180106485